# EUROPÄISCHE PATENTSCHRIFT

(11) **EP 2 765 119 B1**
(45) Veröffentlichungstag und Bekanntmachung des Hinweises auf die Patenterteilung: **28.07.2021**
(21) Anmeldenummer: 13154979.2
(22) Anmeldetag: 12.02.2013
(51) Int. Cl.: C03C 3/097, C03C 10/00, C03C 10/04, A61C 13/00, A61L 27/10

(54) **Rohling für dentale Zwecke**
Blank for dental purposes
Ébauche à des fins dentaires

(43) Veröffentlichungstag der Anmeldung: 13.08.2014
(73) Patentinhaber: Ivoclar Vivadent AG, 9494 Schaan (LI)
(72) Erfinder: Bürke, Harald, 6820 Frastanz (AT); Tauch, Diana, 9475 Sevelen (CH); Schweiger, Marcel, 7000 Chur (CH); Höland, Wolfram, 9494 Schaan (LI); Ritzberger, Christian, 9472 Grabs (CH); Rheinberger, Volker, 9490 Vaduz (LI)
(74) Vertreter: Uexküll & Stolberg

(56) Entgegenhaltungen:
- EP-A1- 1 505 041
- EP-A1- 1 688 397
- EP-A1- 1 688 398
- WO-A1-2008/083358
- WO-A1-2013/086187
- DE-A1-102005 028 637

## Beschreibung

Die Erfindung betrifft einen Rohling für dentale Zwecke, mit dem die optischen Eigenschaften von natürlichem Zahnmaterial sehr gut nachgeahmt werden können und der sich aufgrund seiner Eigenschaften insbesondere für die einfache Herstellung von ästhetisch anspruchsvollen Dentalrestaurationen mit sehr guten mechanischen Eigenschaften eignet.

Es stellt eine große Herausforderung dar, Rohlinge zu schaffen, die den vielfältigen Anforderung für einen Einsatz im Bereich der Dentaltechnik gerecht werden. Derartige Rohlinge sollen nicht nur einfach herstellbar sein, sondern sie sollen auch einfach formbar sein und trotzdem hochfeste Restaurationen ergeben. Schließlich sollen bereits die Rohlinge eine Optik aufweisen, die der des natürlichen Zahnmaterials nahe kommt, damit eine aufwendige nachträglich Verblendung der Restauration entfallen kann.

Rohlinge für den Einsatz in der Dentaltechnik sind aus dem Stand der Technik bekannt.

Die DE 197 14 178 A1 beschreibt mehrfarbige Formkörper aus Keramik oder Kunststoff, aus denen durch maschinelle Weiterverarbeitung Zahnrestaurationen hergestellt werden können. Als keramischer Werkstoff wird insbesondere eine Leucit-haltige Glaskeramik verwendet. Zur Herstellung der Formkörper werden unterschiedliche gefärbte Pulver oder Granulate der Ausgangsmaterialien in eine Pressmatrize eingefüllt und verpresst. Der Formkörper wird zur Verfestigung noch gesintert und in der verfestigten Form mittels CAD/CAM-Verfahren oder Kopierfräsen zur Zahnrestauration weiterverarbeitet.

Aus der DE 103 36 913 A1 sind einfarbige Rohlinge auf Basis von Lithiummetasilikat-Glaskeramiken bekannt, die aufgrund ihrer relativen geringen Festigkeit in einfacher Weise maschinell bearbeitet und durch Wärmebehandlung in hochfeste Dentalrestaurationen auf Basis von Lithiumdisilikat-Glaskeramik umgewandelt werden können.

Die EP 1 859 757 A2 offenbart mehrfarbige Rohlinge auf Basis von ZrO₂, die durch Verpressen von unterschiedlich gefärbten Pulver- oder Granulatschichten und Vorsinterung erhalten werden. Der resultierende Rohling wird durch Fräsen und Schleifen zu einem dentalen Formteil geformt. Der Fräsprozess muss derart durchgeführt werden, dass das dentale Formteil ein Übermaß aufweist, um die Schwindung des Formteils beim anschließenden Dichtsintern zu berücksichtigen.

Die EP 2 065 012 A1 beschreibt die Herstellung von Dentalrestaurationen mit natürlich wirkenden Farb- und Opazitätsgradienten aus keramischen Formkörpern, die unterschiedlich gefärbte Volumenbereiche haben. Die Formkörper werden unter Verwendung eines speziell gestalteten Kanalsystems unter Druck- und Wärmeeinwirkung in einen Formhohlraum gepresst, um die Dentalrestauration zu bilden. Das spezielle Kanalsystem sorgt dabei für die gewünschte Verteilung der unterschiedlich gefärbten Volumenbereiche in der Restauration. Eine maschinelle Verarbeitung der Formkörper zur Restauration wird nicht beschrieben.

Die EP 1 900 341 A1 offenbart Formkörper aus mehreren unterschiedlich gefärbten Schichten mit spezieller Schichtenabfolge, damit der Farbübergang zwischen den Schichten nicht wahrnehmbar ist. Die Formkörper werden durch Trockenpressen von aufeinander geschichteten unterschiedlich gefärbten Glaskeramik-Pulvern, Entbinderung und Sinterung hergestellt. Aus diesen Formkörpern können mittels CAD/CAM-Verfahren dentale Restaurationen hergestellt werden.

WO2013086187 A1 offenbart Rohlinge aus Lithiumdisilikat- und/oder Lithiummetasilikat-Glaskeramikmaterialien, die mindestens zwei Schichten mit unterschiedlichen Transluzenzstufen aufweisen.

Bei den bekannten mehrfarbigen Rohlingen aus Pulver- oder Granulatschichten ist jedoch nach der Formgebung zur Dentalrestauration noch ein Sinterschritt erforderlich ist, um die für eine Dentalrestauration zwingend erforderliche hohe Festigkeit zu erzielen. Diese Sinterung ist allerdings mit einer deutlichen Schrumpfung verbunden, die durch Einsatz von vergrösserten Formen aufwendig berücksichtigt werden muss. Auch können die bekannten Rohlinge nicht in jedem Fall durch maschinelle Bearbeitung zu den gewünschten Dentalrestaurationen verarbeitet werden oder sie weisen für eine solche Bearbeitung eine zu hohe Festigkeit auf, was zu einem übermäßigen Verschleiß der eingesetzten Schleif- und Fräswerkzeuge führt.

Erfindungsgemäß sollen diese Probleme vermieden werden. Der Erfindung liegt insbesondere die Aufgabe zugrunde, einen Rohling zur Verfügung zu stellen, mit dem die optische Erscheinung von natürlichem Zahnmaterial sehr gut nachgeahmt werden kann, dem maschinell in einfacher Weise die Form der gewünschten Dentalrestauration gegeben werden kann und der nach der Formgebung ohne wesentliche Schrumpfung zu einer präzisen und hochfesten Dentalrestauration umgewandelt werden kann.

Diese Aufgabe wird durch den Rohling nach den Ansprüchen 1 bis 8 gelöst. Gegenstand der Erfindung ist ebenfalls das Verfahren zur Herstellung des Rohlings nach den Ansprüchen 9 bis 22, das Verfahren zur Herstellung von Dentalrestaurationen nach den Ansprüchen 23 bis 25 sowie die Verwendung des Rohlings nach Anspruch 26.

Der erfindungsgemäße Rohling für dentale Zwecke zeichnet sich dadurch aus, dass er mindestens 2 miteinander verbundene Schichten von
Lithiumsilikat-Glas,
Lithiumsilikat-Glas mit Keimen oder
Lithiummetasilikat-Glaskeramik
aufweist, wobei die Schichten sich in der Farbe unterscheiden und die Schichten monolithisch sind und wobei das Lithiumsilikat-Glas, das Lithiumsilikat-Glas mit Keimen und die Lithiummetasilikat-Glaskeramik 2,00 bis 5,00 Gew.-% K₂O enthalten.

Mit Unterschieden in der Farbe sind auch Unterschiede in der Transluzenz, Opaleszenz oder Fluoreszenz gemeint. Die Farbe kann insbesondere durch ihren Lab-Wert oder durch einen in der Dentalindustrie üblichen Farbschlüssel charakterisiert werden.

Es ist bevorzugt, dass die Schichten aus Lithiumsilikat-Glas, Lithiumsilikat-Glas mit Keimen oder Lithiummetasilikat-Glaskeramik bestehen.

Der Begriff "monolithisch" bezeichnet Schichten, die kontinuierlich sind und sich damit von diskontinuierlichen Schichten, wie Schichten von Teilchen, z.B. Pulver- oder Granulatschichten, unterscheiden. Die erfindungsgemäß verwendeten monolithischen Schichten können auch als Massivschichten der Gläser und Glaskeramiken bezeichnet werden.

Das Vorliegen von monolithischen Schichten in dem erfindungsgemäßen Rohling ist dafür mit verantwortlich, dass seine Umwandlung zur gewünschten hochfesten Dentalrestauration durch Wärmebehandlung ohne wesentliche Schrumpfung möglich ist. Die demgegenüber bei herkömmlichen Rohlingen vorliegenden diskontinuierlichen Schichten, wie gepresste Schichten aus Pulvern oder Granulaten, müssen noch dichtgesintert werden, um die endgültige Dentalrestauration zu ergeben. Dieses Dichtsintern führt jedoch zu einer erheblichen Schrumpfung. Zur Erzeugung von passgenauen Dentalrestaurationen muss daher zunächst eine vergrößerte Form der Restauration erzeugt werden und diese vergrößerte Form wird dann dichtgesintert. Eine solche Verfahrensweise ist jedoch aufwendig und fehleranfällig. Sie erfordert auch zunächst die genaue Bestimmung des jeweils zu wählenden Vergrößerungsfaktors, der unter anderem von den genauen Sinterbedingungen und der Art des eingesetzten Rohlings abhängt.

Der erfindungsgemäße Rohling weist mindestens 2 monolithische Schichten auf, die sich durch ihre Farbe unterscheiden. In einer bevorzugten Ausführungsform enthält der Rohling 2 bis 10, insbesondere 2 bis 8 derartige Schichten. Mit diesen unterschiedlichen Schichten ist es sehr gut möglich, die verschiedenen Bereiche eines zu ersetzenden natürlichen Zahnmaterials in ihren optischen Eigenschaften zu imitieren. Es gelingt daher mit dem erfindungsgemäßen Rohling, die stetig steigende Forderung nach Ausgangsmaterialien für Zahnersatz zu befriedigen, der auch sehr hohen optischen Anforderungen gerecht wird.

Die Schichten haben vorzugsweise eine Dicke von 0,5 bis 10,0 und insbesondere von 1,0 bis 8,0 mm.

Der Rohling weist monolithische Schichten von Lithiumsilikat-Glas, Lithiumsilikat-Glas mit Keimen oder Lithiummetasilikat-Glaskeramik auf.

Das Lithiumsilikat-Glas wird üblicherweise durch Erschmelzen geeigneter Ausgangsstoffe hergestellt. Dieses Glas kann durch Wärmebehandlung in das Lithiumsilikat-Glas mit Keimen umgewandelt werden. Bei den Keimen handelt es sich um solche für die Kristallisation von Lithiummetasilikat und/oder Lithiumdisilikat. Das Lithiumsilikat-Glas mit Keimen kann durch Wärmebehandlung in die Lithiummetasilikat-Glaskeramik überführt werden.

Es ist schließlich möglich, die Lithiummetasilikat-Glaskeramik durch weitere Wärmebehandlung in hochfeste Lithiumdisilikat-Glaskeramik umzuwandeln. Daher sind das Lithiumsilikat-Glas, das Lithiumsilikat-Glas mit Keimen und die Lithiummetasilikat-Glaskeramik Vorläufer der Lithiumdisilikat-Glaskeramik.

In einer bevorzugten Ausführungsform weist der erfindungsgemäße Rohling monolithische Schichten von Lithiumsilikat-Glas mit Keimen oder monolithische Schichten von Lithiummetasilikat-Glaskeramik auf. Einem derartigen Rohling kann aufgrund seiner relativ geringen Festigkeit besonders einfach durch maschinelle Bearbeitung die Form der gewünschten Dentalrestauration verliehen werden.

Weiter ist ein Rohling bevorzugt, bei dem die Lithiummetasilikat-Glaskeramik als Hauptkristallphase Lithiummetasilikat enthält und insbesondere mehr als 5 Vol.-%, bevorzugt mehr als 10 Vol.-% und besonders bevorzugt mehr als 20 Vol.-% an Lithiummetasilikat-Kristallen enthält. Dabei bezeichnet der Begriff "Hauptkristallphase" die Kristallphase, die gegenüber anderen Kristallphasen den höchsten Volumenanteil hat.

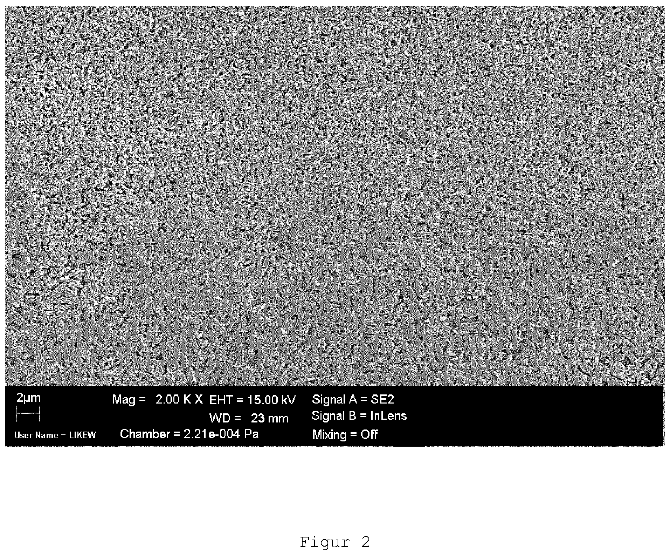

Es hat sich überraschenderweise herausgestellt, dass dem erfindungsgemäßen Rohling nicht nur in einfacher Weise maschinell die Form der gewünschten Dentalrestauration gegeben werden kann, sondern er auch ohne wesentliche Schrumpfung durch Wärmbehandlung zu einer hochfesten Dentalrestauration umgewandelt werden kann. Diese Wärmebehandlung führt zur Kristallisation von hochfester Lithiumdisilikat-Glaskeramik in den Schichten. Es ist besonders überraschend, dass die Kristallisation von Lithiumdisilikat nicht nur im Volumen der monolithischen Schichten, sondern auch über die Grenzfläche der Schichten hinaus erfolgt. Dies zeigen die Figuren 2, 4 und 6.

Es ist ebenfalls möglich, den erfindungsgemäßen Rohling mit Schichten von Lithiumsilikat-Glas, Lithiumsilikat-Glas mit Keimen oder Lithiummetasilikat-Glaskeramik durch Wärmebehandlung zunächst in einen entsprechenden Rohling mit Schichten von Lithiumdisilikat-Glaskeramik umzuwandeln. Dieser Rohling mit Schichten von Lithiumdisilkat-Glaskeramik kann dann insbesondere durch maschinelle Bearbeitung zu der angestrebten Dentalrestauration verarbeitet werden.

Die Erfindung betrifft daher auch einen Rohling für dentale Zwecke, der mindestens 2 miteinander verbundene Schichten von
Lithiumdisilikat-Glaskeramik aufweist, wobei die Schichten sich in der Farbe unterscheiden und die Schichten monolithisch sind und wobei die Lithiumdisilikat-Glaskeramik 2,00 bis 5,00 Gew.-% K₂O enthält.

Es ist bevorzugt, dass die Schichten aus Lithiumdisilikat-Glaskeramik bestehen.

Es ist ein Rohling bevorzugt, bei dem die Lithiumdisilikat-Glaskeramik als Hauptkristallphase Lithiumdisilikat enthält und insbesondere mehr als 30 Vol.-%, bevorzugt mehr als 40 Vol.-% und besonders bevorzugt mehr als 50 Vol.-% an Lithiumdisilikat-Kristallen enthält. Dabei bezeichnet der Begriff "Hauptkristallphase" die Kristallphase, die gegenüber anderen Kristallphasen den höchsten Volumenanteil hat.

Bevorzugte Ausführungsformen für sowohl den erfindungsgemäßen Rohling mit Schichten von Lithiumsilikat-Glas, Lithiumsilikat-Glas mit Keimen oder Lithiummetasilikat-Glaskeramik als auch den erfindungsgemäßen Rohling mit Schichten von Lithiumdisilikat-Glaskeramik sind im Folgenden beschrieben.

Es sind Rohlinge bevorzugt, bei denen das Lithiumsilikat-Glas, das Lithiumsilikat-Glas mit Keimen, die Lithiummetasilikat-Glaskeramik und die Lithiumdisilikat-Glaskeramik mindestens eine und vorzugsweise alle der folgenden Komponenten in den angegebenen Mengen enthalten:

| Komponente | Gew.-% |
|---|---|
| SiO₂ | 50,0 bis 80,0 |
| Li₂O | 6,0 bis 20,0 |
| Me(I)₂O | 2,00 bis 10,0 |
| Me(II)O | 0 bis 12,0, insbesondere 0,1 bis 12,0 |
| Me (III)₂O₃ | 0 bis 8,0, insbesondere 0,1 bis 8,0 |
| Me(IV)O₂ | 0 bis 8,0, insbesondere 0,1 bis 8,0 |
| Me(V)₂O₅ | 0 bis 8,0, insbesondere 0,1 bis 8,0 |
| Me(VI)O₃ | 0 bis 8,0, insbesondere 0,1 bis 8,0 |
| Keimbildner | 0 bis 8,0, insbesondere 0,1 bis 8,0, |

wobei
Me(I)₂O ausgewählt ist aus Na₂O, K₂O, Rb₂O, Cs₂O oder Mischungen davon,
Me(II)O ausgewählt ist aus CaO, BaO, MgO, SrO, ZnO und Mischungen davon,
Me(III)₂O₃ ausgewählt ist aus Al₂O₃, La₂O₃, Bi₂O₃, Y₂O₃, Yb₂O₃ und Mischungen davon,
Me(IV)O₂ ausgewählt ist aus ZrO₂, TiO₂, SnO₂, GeO₂ und Mischungen davon,
Me(V)₂O₅ ausgewählt ist aus Ta₂O₅, Nb₂O₅ und Mischungen davon,
Me(VI)O₃ ausgewählt ist aus WO₃, MoO₃ und Mischungen davon, und
Keimbildner ausgewählt ist aus P₂O₅, Metallen und Mischungen davon.

Als Oxide einwertiger Elemente Me(I)₂O sind Na₂O und K₂O bevorzugt.

Als Oxide zweiwertiger Elemente Me(II)O sind CaO, MgO, SrO und ZnO bevorzugt.

Als Oxide dreiwertiger Elemente Me(III)₂O₃ sind Al₂O₃, La₂O₃ und Y₂O₃ bevorzugt.

Als Oxide vierwertiger Elemente Me(IV)O₂ sind ZrO₂, TiO₂ und GeO₂ bevorzugt.

Als Oxide fünfwertiger Elemente Me(V)₂O₅ sind Ta₂O₅ und Nb₂O₅ bevorzugt.

Als Oxide sechswertiger Elemente Me(VI)O₃ sind WO₃ und MoO₃ bevorzugt.

Als Keimbildner ist P₂O₅ bevorzugt.

Das Lithiumsilikat-Glas, das Lithiumsilikat-Glas mit Keimen, die Lithiummetasilikat-Glaskeramik und die Lithiumdisilikat-Glaskeramik enthalten SiO₂ und Li₂O vorzugsweise in einem Molverhältnis im Bereich von 1,5 bis 3,0, insbesondere 2,0 bis 2,8 und bevorzugt 2,20 bis 2,45.

In einer weiteren bevorzugten Ausführungsform enthalten das Lithiumsilikat-Glas, das Lithiumsilikat-Glas mit Keimen, die Lithiummetasilikat-Glaskeramik und die Lithiumdisilikat-Gaskeramik mindestens eine und vorzugsweise alle der folgenden Komponenten in den angegebenen Mengen

| Komponente | Gew.-% |
|---|---|
| SiO₂ | 65,00 bis 75,00 |
| Li₂O | 14,00 bis 16,00 |
| SrO und CaO | 0 bis 2,00 |
| MgO | 0 bis 2,00 |
| ZnO | 0 bis 2,00 |
| Al₂O₃ | 1,50 bis 3,50 |
| La₂O₃ | 0 bis 2,00 |
| ZrO₂ | 0 bis 4,00 |
| P₂O₅ | 2,50 bis 4,00 |

Es ist weiter bevorzugt, dass das Lithiumsilikat-Glas, das Lithiumsilikat-Glas mit Keimen, die Lithiummetasilikat-Glaskeramik und die Lithiumdisilikat-Glaskeramik Färbemittel und/oder Fluoreszenzmittel enthalten.

Beispiele für Färbemittel sind Oxide von d- und f-Elementen, wie z.B. die Oxide von Ti, V, Sc, Mn, Fe, Co, Ta, W, Ce, Pr, Nd, Tb, Er, Dy, Gd, Eu und Yb. Als Färbemittel können auch Metallkolloide, z.B. von Ag, Au und Pd, verwendet werden, die zusätzlich auch als Keimbildner fungieren können. Diese Metallkolloide können z.B. durch Reduktion von entsprechenden Oxiden, Chloriden oder Nitraten während der Schmelz- und Kristallisationsprozesse gebildet werden.

Die erfindungsgemäßen Rohlinge liegen vorzugsweise in Form von Blöcken, Scheiben oder Zylindern vor. In diesen Formen können sie besonders einfach zu den gewünschten Dentalrestaurationen weiterverarbeitet werden.

In einer weiteren bevorzugten Ausführungsform weisen die erfindungsgemäßen Rohlinge einen Halter für die Befestigung in einer Bearbeitungsvorrichtung auf. Der Halter gestattet die Befestigung der Rohlinge in einer Bearbeitungsvorrichtung, wie insbesondere einer Fräs- oder Schleifvorrichtung. Der Halter hat üblicherweise die Form eines Stifts, und der Halter besteht vorzugsweise aus Metall oder Kunststoff.

Die Erfindung betrifft ebenfalls ein Verfahren zur Herstellung der erfindungsgemäßen Rohlinge.

Das Verfahren zur Herstellung des erfindungsgemäßen Rohlings mit monolithischen Schichten von Lithiumsilikat-Glas, Lithiumsilikat-Glas mit Keimen oder Lithiummetasilikat-Glaskeramik zeichnet sich dadurch aus, dass
(i) monolithischen Schichten von Lithiumsilikat-Glas, Lithiumsilikat-Glas mit Keimen oder Lithiummetasilikat-Glaskeramik aufeinander angeordnet und
(ii) die Schichten miteinander verbunden werden.

In einer bevorzugten Ausführungsform dieses Verfahrens werden Schichten von Lithiumsilikat-Glas oder Lithiumsilikat-Glas mit Keimen in Schichten von Lithiumsilikat-Glas mit Keimen oder Lithiummetasilikat-Glaskeramik umgewandelt. Diese Umwandlung erfolgt insbesondere durch mindestens eine Wärmebehandlung. Bevorzugte Bedingungen für eine Umwandlung von Lithiumsilikat-Glas in Lithiumsilikat-Glas mit Keimen und weiter in eine entsprechende Lithiummetasilikat-Glaskeramik und schließlich auch zur entsprechenden Lithiumdisilikat-Glaskeramik sind oben bereits beschrieben worden.

Besonders bevorzugt werden Schichten von Lithiumsilikat-Glas oder Lithiumsilikat-Glas mit Keimen durch mindestens eine Wärmebehandlung miteinander verbunden und in Schichten von Lithiummetasilikat-Glaskeramik umgewandelt. Das Verbinden und Umwandeln kann sowohl in einer Stufe als auch in getrennten Stufen erfolgen.

Zur Erzeugung der aufeinander angeordneten monolithischen Schichten wird üblicherweise zunächst das Lithiumsilikat-Glas hergestellt. Dazu wird eine Mischung von geeigneten Ausgangsmaterialien, wie z.B. Carbonaten, Oxiden, Phosphaten und Fluoriden, bei Temperaturen von insbesondere 1300 bis 1600°C für 2 bis 10 h erschmolzen. Zur Erzielung einer besonders hohen Homogenität wird die erhaltene Glasschmelze in Wasser gegossen, um ein Glasgranulat zu bilden, und das erhaltene Granulat wird dann erneut aufgeschmolzen.

Die erhaltene Schmelze des Lithiumsilikat-Glases wird dann üblicherweise in eine geeignete Form gegossen, um eine erste monolithische Schicht zu bilden. In gleicher Weise wird dann in der Regel aus der Schmelze eines weiteren Lithiumsilikat-Glases eine zweite monolithische Schicht mit anderer Farbe erzeugt. Diese Verfahren kann wiederholt werden, um noch weitere monolithische Schichten mit anderen Farben zu erzeugen.

Die erhaltenen monolithischen Schichten von Lithiumsilikat-Glas können auch einer Wärmebehandlung bei insbesondere 500 bis 600°C unterzogen werden, um die Bildung von Keimen für die Kristallisation von Lithiummetasilikat und/oder Lithiumdisilkat herbeizuführen. Es liegen dann monolithische Schichten von Lithiumsilikat-Glas mit Keimen vor. Die Wärmebehandlung wird bevorzugt für eine Dauer von 10 bis 180 min durchgeführt. Es ist bevorzugt, die Schichten im Anschluss an die Wärmebehandlung in kontrollierter Weise auf Raumtemperatur abzukühlen. Damit wird vor allem eine Entspannung des keimgebildeten Glases bewirkt.

Die erhaltenen monolithischen Schichten von Lithiumsilikat-Glas mit Keimen können dann einer Wärmebehandlung bei insbesondere 550 bis 750°C unterzogen werden, um die Kristallisation von Lithiummetasilikat herbeizuführen. Es liegen dann monolithische Schichten von Lithiummetasilikat-Glaskeramik vor. Die Wärmebehandlung wird bevorzugt für eine Dauer von 5 bis 60 min durchgeführt.

In Stufe (i) des erfindungsgemäßen Verfahrens werden die erhaltenen monolithischen Schichten von Lithiumsilikat-Glas, Lithiumsilikat-Glas mit Keimen oder Lithiummetasilikat-Glaskeramik aufeinander angeordnet. Dies kann z.B. einfach durch Aufeinanderstapeln der Schichten erfolgen.

In Stufe (ii) erfolgt das Verbinden der monolithischen Schichten. Das kann insbesondere durch Wärmebehandlung oder Verwendung eines Verbindungsmittels erfolgen.

In einer ersten bevorzugten Ausführungsform des erfindungsgemäßen Verfahrens wird
(a1) eine monolithische Schicht in Form einer Schmelze auf eine andere monolithische Schicht aufgebracht.

Auf diese Weise werden die Schichten nicht nur aufeinander angeordnet, sondern auch miteinander verbunden.

Es ist bevorzugt, bei dieser Ausführungsform monolithische Schichten von Lithiumsilikat-Glas einzusetzen.

Es ist weiter bevorzugt, dass die eine monolithische Schicht in Form einer Schmelze eine Temperatur von 1100 bis 1500°C hat und die andere monolithische Schicht eine Temperatur von 400 bis 600°C hat. Der Temperaturunterschied zwischen den Schichten trägt dazu bei, ein Vermischen der Schichten und das Auftreten von Spannungen im Rohling zu vermeiden.

Insbesondere wird so vorgegangen, dass die Schmelze eines ersten Lithiumsilikat-Glases bei insbesondere 1350 bis 1500°C erzeugt und in einer geeigneten Form zu einer monolithischen Schicht gegossen wird. Diese Schicht wird auf eine Temperatur von 400 bis 600°C abgekühlt. Dann wird auf diese erste Schicht die Schmelze eines zweiten Lithiumsilikat-Glases gegossen, um eine zweite sich in der Farbe unterscheidende Schicht zu bilden. Bei dieser Verfahrensweise verschmelzen die Schichten und werden fest miteinander verbunden.

Durch Aufgießen der Schmelze von weiteren Lithiumsilikat-Gläsern können auch Rohlinge mit mehr als zwei Schichten erhalten werden.

Durch die oben beschriebenen Wärmebehandlungen kann das Lithiumsilikat-Glas in Lithiumsilikat-Glas mit Keimen, Lithiummetasilikat-Glaskeramik und schließlich auch zu Lithiumdisilikat-Glaskeramik umgewandelt werden, um entsprechende Rohlinge zu erzeugen.

In einer zweiten bevorzugten Ausführungsform des erfindungsgemäßen Verfahrens werden
(b1) die aufeinander angeordneten monolithischen Schichten auf eine Temperatur von mindestens 500°C und insbesondere eine Temperatur im Bereich von 550 bis 750°C erwärmt.

Dabei werden bevorzugt Schichten von Lithiumsilikat-Glas mit Keimen verwendet.

Durch die Wärmeeinwirkung erfolgt ein Verschmelzen an der Grenzfläche und damit ein Verbinden der Schichten. Das Erwärmen erfolgt insbesondere für einen Zeitraum von 5 bis 60 min.

Es ist von besonderem Vorteil, dass durch das Erwärmen nicht nur eine Verbindung zwischen den Schichten erzielt wird, sondern auch die Kristallisation von Lithiummetasilikat bewirkt werden kann. Zur Herbeiführung der Kristallisation werden die Schichten auf insbesondere 550 bis 750°C erwärmt. Es ist ebenfalls möglich, zunächst bei einer ausgehend von Raumtemperatur allmählich steigenden Temperatur das Fügen der Schichten herbeizuführen und dann bei einer für die Bildung von Metasilikat geeigneten Temperatur, dessen Kristallisation zu bewirken.

Demgemäß können mit dieser Ausführungsform auch insbesondere Rohlinge mit Schichten von Lithiummetasilikat-Glaskeramik in einfacher Weise hergestellt werden.

Es ist besonders bevorzugt, die Schichten während des Erwärmens mit einem Druck von insbesondere 0,01 bis 4,0 MPa aneinander zu pressen.

Es ist weiter bevorzugt, die einander zugewandten Oberflächen der Schichten zu glätten. Das kann durch übliches Schleifen und Polieren erfolgen. Als Schleif- und Poliermittel können insbesondere Diamantscheiben und SiC-Papier eingesetzt werden.

Bei glatten Oberflächen bedarf es in der Regel allenfalls eines kleinen Pressdrucks von z.B. etwa 0,01 MPa, um eine ausgezeichnete Fügung der Glasschichten zu erreichen. Bei nicht geglätteten Oberflächen werden in der Regel Pressdrucke von 1 bis 4 MPa angewendet.

Der Pressdruck wird insbesondere über polierte Oberflächen aus Si₃N₄, Stahl, Graphit, Al₂O₃ und/oder ZrO₂ auf die gestapelten Schichten aufgebracht. Es ist auch möglich, ein Trennmittel wie BN einzusetzen, um ein Kleben der Schichten an dem Pressstempel zu vermeiden. Auch der Einsatz eines Pressstempels mit Prägerelief ist möglich.

Bei den eingesetzten Schichten kann es sich insbesondere um in den passenden Abmessungen gegossene Schichten oder auch große Platten oder Stäbe handeln, aus denen Schichten mit den passenden Abmessungen geschnitten wurden.

In einer dritten bevorzugten Ausführungsform des erfindungsgemäßen Verfahrens wird

(c1) zwischen den monolithischen Schichten ein Verbindungsmittel vorgesehen.

Als Verbindungsmittel kommen insbesondere ein Glaslot, ein kristallisierendes Gaslot, ein Glaskeramiklot oder ein Kleber in Frage.

Als Glaslot, kristallisierendes Gaslot und Glaskeramiklot kommen insbesondere Gläser und Glaskeramiken in Frage, die bei niedriger Temperatur und insbesondere einer Temperatur von 550 bis 750°C schmelzen. Sie werden üblicherweise als Pulver, Schlicker oder Pasten auf die zu verbindenden Schichten aufgebracht. Durch Temperaturbehandlung schmilzt das Lot und benetzt die Oberflächen der Schichten. Nach dem Abkühlen ergibt sich auf diese Weise eine über das Lot vermittelte feste Verbindung zwischen den Schichten. Es ist bevorzugt, die mit dem Lot versehenen und aufeinander angeordneten monolithischen Schichten mindestens auf die Schmelztemperatur des Lots zu erwärmen.

Durch das Erwärmen des Lots kann gleichzeitig auch die Kristallisation von Lithiummetasilikat in den Schichten erfolgen. Zur Herbeiführung dieser Kristallisation wird auf insbesondere 550 bis 750°C erwärmt. Es ist ebenfalls möglich, zunächst bei einer ausgehend von Raumtemperatur allmählich steigenden Temperatur das Schmelzen des Lots und damit das Verbinden der Schichten herbeizuführen und dann bei einer für die Bildung von Lithiummetasilikat geeigneten Temperatur, dessen Kristallisation zu bewirken.

Als Kleber kommen insbesondere polymerisierbare Kleber mit Glas als Füllstoff in Frage. Dabei sind solche Glasfüllstoffe bevorzugt, die bei Wärmebehandlung kristallisieren. Besonders bevorzugt sind als Füllstoffe solche Gläser, die eine Zusammensetzung haben, wie die des Glases einer der zu verbindenden Schichten oder wie die einer Mischung der Gläser der zu verbindenden Schichten.

Die Kleber werden auf mindestens eine der zu verklebenden Schichten z.B. durch Aufstreichen aufgebracht. Die Schichten werden aufeinander angeordnet und dann wird der Kleber in üblicher Weise gehärtet. Auf diese Weise wird ein Rohling aus verklebten Schichten erhalten, der zu einer Dentalrestauration weiter verarbeitet werden kann.

Es ist bevorzugt, mit dem Kleber Schichten von Lithiumsilikat-Glas, Lithiumsilikat-Glas mit Keimen und Lithiummetasilikat-Glaskeramik zu verbinden.

Die mit dem erfindungsgemäßen Verfahren hergestellten Rohlinge mit Schichten von Lithiumsilikat-Glas, Lithiumsilikat-Glas mit Keimen oder Lithiummetasilikat-Glaskeramik können in einfacher Weise zu einem Rohling mit Schichten von Lithiumdisilikat-Glaskeramik umgewandelt werden. Die Umwandelbarkeit der Vorläufer Lithiumsilikat-Glas, Lithiumsilikat-Glas mit Keimen und Lithiummetasilikat-Glaskeramik zu Lithiumdisilikat-Glaskeramik ist oben bereits beschrieben worden.

Das Verfahren zur Herstellung des erfindungsgemäßen Rohlings mit Schichten von Lithiumdisilikat-Glaskeramik zeichnet sich dadurch aus, dass
(iii)erfindungsgemäßer Rohling mit Schichten von Lithiumsilikat-Glas, Lithiumsilikat-Glas mit Keimen und Lithiummetasilikat-Glaskeramik mindestens einer Wärmebehandlung unterworfen wird, um das Lithiumsilikat-Glas, das Lithiumsilikat-Glas mit Keimen oder die Lithiummetasilikat-Glaskeramik in Lithiumdisilikat-Glaskeramik umzuwandeln.

Bevorzugt wird ein Rohling mit Schichten von Lithiumsilikat-Glas mit Keimen oder mit Schichten von Lithiummetasilikat-Glaskeramik der Wärmebehandlung unterworfen wird.

Die Wärmebehandlung wird vorzugsweise bei einer Temperatur von mindestens 750°C und insbesondere einer Temperatur im Bereich von 750 bis 950°C durchgeführt.

Die erfindungsgemäßen Rohlinge sind aufgrund ihrer Eigenschaften besonders geeignet, zu Dentalrestaurationen weiterverarbeitet zu werden.

Die Erfindung betrifft daher auch ein Verfahren zur Herstellung von Dentalrestaurationen, bei dem
(d1) erfindungsgemäßem Rohling mit Schichten von Lithiumsilikat-Glas, Lithiumsilikat-Glas mit Keimen oder Lithiummetasilikat-Glaskeramik durch maschinelle Bearbeitung die Form der Dentalrestauration gegeben wird,
(d2) mindestens eine Wärmebehandlung durchgeführt wird, um das Lithiumsilikat-Glas, das Lithiumsilikat-Glas mit Keimen oder die Lithiummetasilikat-Glaskeramik in Lithiumdisilikat-Glaskeramik umzuwandeln, und
(d3) gegebenenfalls die Oberfläche der erhaltenen Dentalrestauration endbehandelt wird
oder in einer alternativen Ausführungsform
(e1) dem erfindungsgemäßen Rohling mit Schichten von Lithiumdisilikat-Glaskeramik durch maschinelle Bearbeitung die Form der Dentalrestauration gegeben wird und
(e2) gegebenenfalls die Oberfläche der erhaltenen Dentalrestauration endbehandelt wird.

Aus den erfindungsgemäßen Rohlingen können in einfacher Weise durch maschinelle Bearbeitung die gewünscht geformten Dentalrestaurationen herausgearbeitet werden. Es werden hierfür insbesondere Rohlinge mit Schichten von Lithiumsilikat-Glas mit Keimen (d1), Lithiummetasilikat-Glaskeramik (d1) oder Lithiumdisilikat-Glaskeramik (e1) verwendet.

Die maschinelle Bearbeitung in den Stufen (d1) und (e1) erfolgt üblicherweise durch materialabtragende Verfahren und insbesondere durch Fräsen und/oder Schleifen. Es ist bevorzugt, dass die maschinelle Bearbeitung mit computer-gesteuerten Fräs- und/oder Schleifvorrichtungen erfolgt. Besonders bevorzugt erfolgt die maschinelle Bearbeitung im Rahmen eines CAD/CAM-Verfahrens.

In der Stufe (d2) wird der Rohling einer Wärmebehandlung unterzogen, um die gesteuerte Kristallisation von Lithiumdisilikat und damit die Bildung von Lithiumdisilikat-Glaskeramik herbeizuführen. Die Wärmebehandlung findet insbesondere bei einer Temperatur von 750 bis 950°C und bevorzugt 800 bis 900°C statt. Die Wärmebehandlung wird insbesondere für eine Dauer von 1 bis 30 min, bevorzugt 2 bis 15 min, durchgeführt.

Die Wärmebehandlung kann auch dazu dienen, Kleber auszubrennen, der bei der Herstellung des eingesetzten Rohlings verwendet wurde. Allerdings ist es auch möglich, dieses Ausbrennen von Kleber als separaten Schritt vor der Kristallisation von Lithiumdisilikat in Stufe (d2) durchzuführen.

Es ist besonders überraschend, dass insbesondere die Kristallisation von Lithiumdisilikat auch über die Grenzfläche der Schichten hinweg erfolgt, wie durch rasterelektronenmikroskopische Untersuchungen (REM-Untersuchungen) festgestellt werden konnte. Es wird angenommen, dass dieses Phänomen wesentlich zur festen Verbindung der Schichten beiträgt und einer Schwächung der erhaltenen Dentalrestauration an dieser Grenzfläche wirksam entgegenwirkt.

Es liegen nach Durchführung der Stufen (d2) und (e1) Dentalrestaurationen mit Schichten von Lithiumdisilikat-Glaskeramik vor, die über ausgezeichnete mechanische Eigenschaften und eine hohe chemische Stabilität verfügen. Darüber hinaus gestatten sie durch die mehreren sich in der Farbe unterscheidenden Schichten eine ausgezeichnete Nachahmung der optischen Eigenschaften von natürlichem Zahnmaterial, z.B. von Farbverläufen vom Dentin zur Schneide. Schließlich können die Restaurationen auch ohne wesentliche Schrumpfung aus den erfindungsgemäßen Rohlingen erzeugt werden. Das beruht insbesondere darauf, dass die erfindungsgemäßen Rohlinge monolithische Schichten und nicht diskontinuierliche Schichten, wie Pulver- oder Granulatschichten, aufweisen. Derartige diskontinuierliche Schichten müssen auf dem Weg zur endgültigen Restauration noch dichtgesintert werden, was mit einer signifikanten Schrumpfung einhergeht. Durch Einsatz der erfindungsgemäßen Rohlinge können daher in besonders einfacher Weise Dentalrestaurationen mit genau den gewünschten Abmessungen hergestellt werden.

Die erfindungsgemäß hergestellten Dentalrestaurationen sind bevorzugt ausgewählt aus Kronen, Abutments, Abutmentkronen, Inlays, Onlays, Veneers, Schalen und Brücken sowie Überwürfen für mehrteilige Restaurationsgerüste, die z.B. aus Oxidkeramik, Metallen oder Dentallegierungen bestehen können.

In den optionalen Stufen (d3) und (e2) kann die Oberfläche der Dentalrestauration noch endbehandelt werden. Dabei ist es insbesondere möglich, noch einen Glanzbrand bei einer Temperatur von 700 bis 850°C durchzuführen oder die Restauration zu polieren.

Darüber hinaus kann auch eine Schichtmasse aus Gläsern und/oder Glaskeramiken aufgebracht werden.

Eine Endbehandlung mit einer Glasur und die Kristallisation von Lithiumdisilikat können selbstverständlich auch in einem Schritt erfolgen.

Aufgrund der geschilderten besonderen Eigenschaften der erfindungsgemäßen Rohlinge eignen sich diese insbesondere zur Erzeugung von Dentalrestaurationen. Die Erfindung betrifft daher auch die Verwendung der Rohlinge zur Herstellung von Dentalrestaurationen und insbesondere von Kronen, Abutments, Abutmentkronen, Inlays, Onlays, Veneers, Schalen und Brücken sowie Überwürfen.

Die Erfindung wird im Folgenden anhand von Beispielen näher erläutert.

### Beispiele

Die Beispiele erläutern insbesondere die Herstellung von zweischichtigen Rohlingen. In analoger Weise konnten auch Rohlinge mit mehr als 2 und bis zu 10 Schichten mit unterschiedlicher Farbe hergestellt werden. Die Abfolge der Schichten wurde jeweils so gewählt, dass der Verlauf der Farbe, Opaleszenz und Transluzenz von natürlichem Zahnmaterial möglichst naturgetreu imitiert wurde.

### Beispiel 1 - Schmelzgiessverfahren

Dieses Beispiel beschreibt die Herstellung eines erfindungsgemäßen Rohlings in Form eines Blocks mit 2 unterschiedlich gefärbten monolithischen Schichten von Lithiumsilikat-Glas, die Keimbildung in dem Glas und dessen Umwandlung zu Lithiummetasilikat-Glaskeramik sowie die Verarbeitung des Blocks mit Schichten von Lithiummetasilikat-Glaskeramik zu einer hochästhetischen Dentalrestauration aus Lithiumdisilikat-Glaskeramik.

Es wurden zwei Lithiumsilikat-Gläser mit der nachstehenden Zusammensetzung erschmolzen.
Glas 1: Zusammensetzung in Gew.-%:
   74.36 SiO₂, 3.26 K₂O, 15.45 Li₂O, 3.55 Al₂O₃, 3.38 P₂O₅
Glas 2: Zusammensetzung in Gew.-%:
   70.64 SiO₂, 3.09 K₂O, 14.68 Li₂O, 3.38 Al₂O₃, 3.21 P₂O₅, 3.00 ZrO₂, 2.00 färbende Oxide

Zunächst wurden die Gläser aus geeigneten Ausgangsstoffen bei 1450 bis 1500°C erschmolzen. Nach ausreichender Homogenisierung wurde die Schmelze von Glas 1 in eine Graphitform zu einer monolithischen Schicht gegossen und die Schicht wurde innerhalb von 30 bis 60 Sekunden auf 500 bis 550°C abgekühlt. Dann wurde in der Graphitform auf die abgekühlte Glasschicht die Schmelze von Glas 2 gegossen. Auf diese Weise wurde ein homogenes Verschmelzen der Glasschichten ohne zusätzlichen Pressdruck bewirkt. Weitere Glasschichten konnten analog dem beschriebenen Prozess angegossen werden.

Der aus der Form entnommene mindestens zweischichtige Glasblock wurde in einem Ofen einer Wärmebehandlung für 10 min bei 500°C unterzogen, um die Keimbildung durchzuführen, und kontrolliert auf Raumtemperatur abgekühlt.

Anschließend wurde der Block einer Wärmebehandlung für 20 min bei 650°C unterzogen, um die gesteuerte Kristallisation von Lithiummetasilikat in den Schichten zu bewirken. Es wurde ein Block mit Schichten von Lithiummetasilikat-Glaskeramik erhalten.

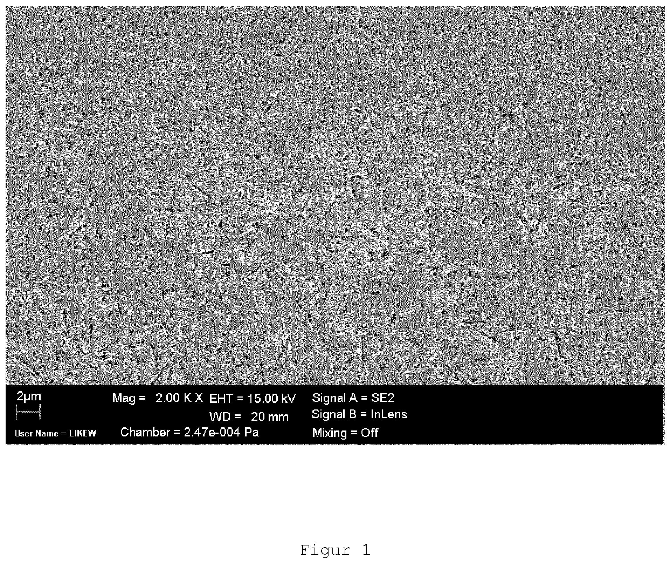

In der Figur 1 ist die REM-Aufnahme eines Schnittes durch den Block mit Lithiummetasilikat gezeigt, nachdem die Oberfläche 8 s mit wäßriger HF-Lösung behandelt worden war, um die Kristallphase anzuätzten und das Gefüge sichtbar zu machen. Es zeigt sich die ausgezeichnete Fügung der Schichten an der Grenzfläche sowie die Kristallisation über die Grenzfläche hinweg.

Diesem Block konnte mittels CAD/CAM-Verfahren die Form von Dentalrestaurationen gegeben. Durch abschließende Wärmebehandlung für 10 min bei 850°C wurde Lithiumdisilikat zur Ausscheidung gebracht und damit die gewünschte hochfeste Dentalrestauration erhalten, die aufgrund ihrer mehreren Schichten mit unterschiedlicher Farbe eine zum natürlichen Zahn passende Optik aufwies.

In der Figur 2 ist die REM-Aufnahme eines Schnittes durch einen Block mit ausgeschiedenem Lithiumdisilikat gezeigt, nachdem die Oberfläche 30 s mit HF-Dampf behandelt worden war, um die Kristallphase anzuätzten und das Gefüge sichtbar zu machen. Es ist überraschenderweise ein sehr homogenes Gefüge auch über die Grenzfläche hinweg erkennbar, welches die Grenzfläche fast völlig verschwinden lässt. Die Herstellung aus mehreren unterschiedlichen Glasschichten ist allenfalls noch an der unterschiedlichen Farbe dieser Schichten erkennbar.

### Beispiel 2 - Fügen von Glasschichten durch Temperatur und Druck

Es wurden 2 bis 10 Glasschichten in einem Heissfügeprozess bei 500 bis 750°C unter Einwirkung eines Drucks von 0,01 bis 4 MPa zu monolithischen Rohlingen geformt. Dabei war es möglich, durch Wärmebehandlung nicht nur das Fügen der verschiedenen Glasschichten, sondern auch deren Kristallisation ablaufen zu lassen.

### Beispiel 2A: Geschliffene Oberflächen, kleiner Druck - 0,01 MPa

### (a) Herstellung Glasschichten mit Keimen

Es wurden zunächst zwei Lithiumsilikat-Gläser mit der nachstehenden Zusammensetzung bei 1450 bis 1500°C erschmolzen.
*Glas 3:* Zusammensetzung in Gew.-%:
   70.68 SiO₂, 4.00 K₂O, 14.68 Li₂O, 3.38 Al₂O₃, 3.21 P₂O₅, 0.26 MgO, 0.85 ZrO₂, 2.94 färbende Oxide
*Glas 4:* Zusammensetzung in Gew.-%:
   70.99 SiO₂, 4.74 K₂O, 14.76 Li₂O, 1.49 Al₂O₃, 3.28 P₂O₅, 0.70 ZnO, 0.99 ZrO₂, 3.05 färbende Oxide

Die erhaltenen Schmelzen wurden dann jeweils in Formen zu Glasschichten mit den gewünschten Abmessungen gegossen.

Die Glasschichten wurden für 10 min bei 500°C wärmebehandelt, um Keime zu bilden. Anschließend wurden sie kontrolliert auf Raumtemperatur abgekühlt.

Die zu verbindenden Oberflächen der Glasschichten wurden dann exakt planparallel geschliffen und -poliert. Dazu wurden sie zunächst mit einer Diamantscheibe 74µm planparallel geschliffen und dann in einem ersten Polierschritt mit einer Diamantscheibe 20µm und anschließend in einem zweiten Polierschritt mit 1000er SiC-Papier behandelt. Die erhaltenen Oberflächen wurden mit Wasser und ggf. auch Ethanol oder Aceton gereinigt.

### (b) Verbinden der Glasschichten und Kristallisation von Lithiummetasilikat

Die zwei Glasschichten wurden exakt aufeinander gelegt und durch Krafteinwirkung senkrecht zu den zu fügenden Flächen mit einem Druck von 0.01 MPa zusammengepresst. Die zusammengepressten Glasschichten wurden dann beginnend bei 400°C innerhalb von 25 min auf 650°C erwärmt, um die Fügung der Schichten zu erreichen. Durch Beibehaltung einer Temperatur von etwa 650 bis 660°C für 20 min wurde dann die Kristallisation von Lithiummetasilikat ausgelöst. Anschließend wurde der erhaltene kristallisierte Block kontrolliert auf Raumtemperatur abgekühlt.

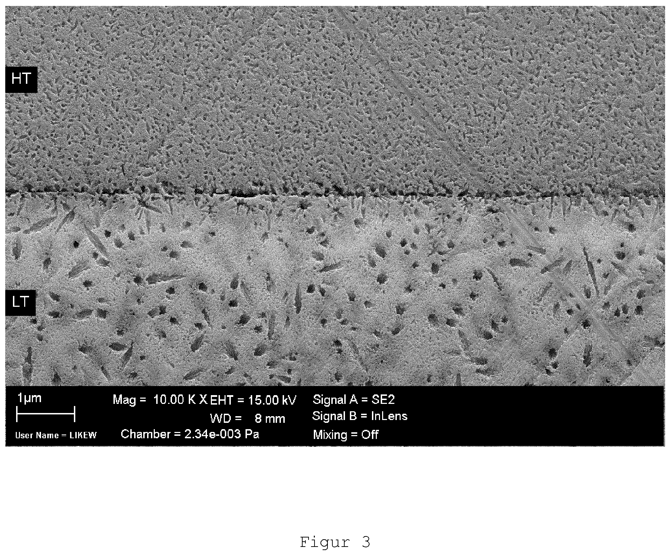

In der Figur 3 ist die REM-Aufnahme eines Schnittes durch den Block mit Lithiummetasilikat gezeigt, nachdem die Oberfläche 8 s mit wäßriger HF-Lösung behandelt worden war, um die Kristallphase anzuätzen und damit das Gefüge sichtbar zu machen. Auch diese Aufnahme zeigte eine sehr gute Fügung der Schichten sowie eine beginnende Kristallisation über die Grenzfläche hinweg.

### (c) Maschinelle Bearbeitung und Lithiumdisilikat-Kristallisation

Der erhaltene Block mit zwei unterschiedlichen Schichten von Lithiummetasilikat-Glaskeramik konnte in einfacher Weise mit herkömmlichen CAM-Einheiten, wie Cerec MC XL, von Sirona, maschinell bearbeitet werden, um ihm die Form der gewünschten Dentalrestaurationen zu geben.

Nach der maschinellen Bearbeitung wurde durch Wärmebehandlung für 10 min bei 850°C die Lithiummetasilikat-Glaskeramik in Lithiumdisilikat-Glaskeramik umgewandelt. Dadurch wurde eine Dentalrestauration mit der angestrebten Endfestigkeit erreicht. Sie hatte zudem eine sehr ansprechende Optik in Form einer farblichen Abstufung, die dem Farbverlauf von Dentin zu Schneide entsprach.

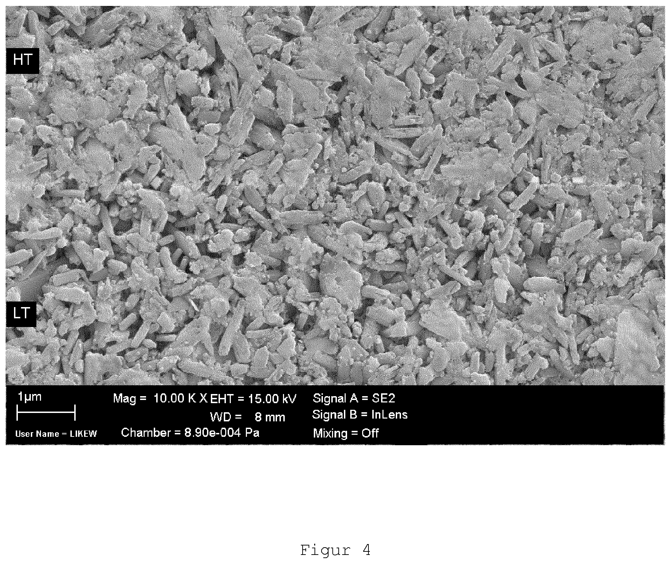

In der Figur 4 ist die REM-Aufnahme eines Schnittes durch einen maschinell nicht bearbeiteten Block mit Lithiumdisilikat gezeigt, nachdem die Oberfläche 30 s mit HF-Dampf behandelt worden war. Auch bei diesem ist überraschenderweise ein sehr homogenes Gefüge auch über die Grenzfläche hinweg erkennbar, welches die Grenzfläche fast völlig verschwinden lässt. Die Herstellung aus mehreren unterschiedlichen Glasschichten ist nur noch an der unterschiedlichen Farbe dieser Schichten erkennbar.

### Beispiel 2B: Ungeschliffene Oberflächen, großer Druck - 1,5 MPa

Das Beispiel 2A wurde wiederholt. Dabei wurden aber die Oberflächen der Glasschichten nicht geschliffen und sie wurden bei einem höheren Druck von 1,5 MPa und durch eine abgewandelte Wärmebehandlung aneinander gefügt und zu Lithiummetasilikat-Glaskeramik kristallisiert.

Während dieser Wärmebehandlung wurden die zusammengepressten Glasschichten beginnend bei 550°C innerhalb von 2 min auf etwa 680°C erwärmt, um die Fügung der Schichten zu erreichen. Durch Beibehaltung einer Temperatur von etwa 680°C für etwa 20 min wurde dann die Kristallisation von Lithiummetasilikat ausgelöst. Anschließend wurde der erhaltene kristallisierte Block kontrolliert auf Raumtemperatur abgekühlt.

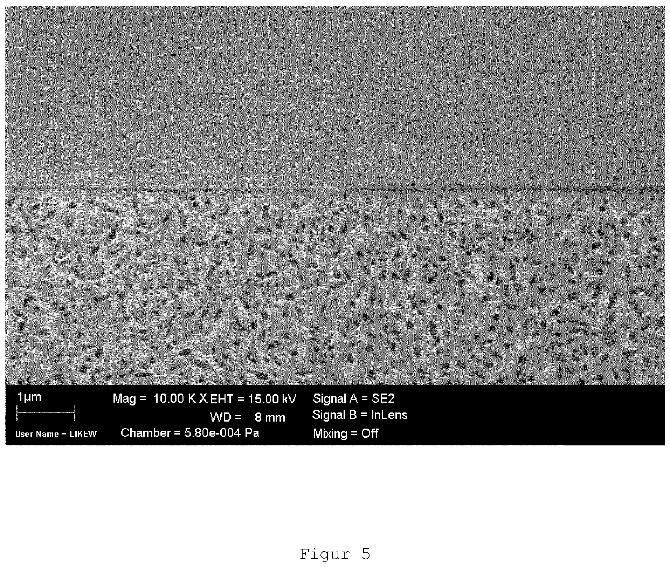

In der Figur 5 ist die REM-Aufnahme eines Schnittes durch den Block mit Lithiummetasilikat gezeigt, nachdem die Oberfläche 8 s mit wäßriger HF-Lösung behandelt worden war. Auch diese Aufnahme zeigte eine sehr gute Fügung der Schichten.

Nach der maschinellen Bearbeitung wurde durch Wärmebehandlung für 10 min bei 850°C die Lithiummetasilikat-Glaskeramik in Lithiumdisilikat-Glaskeramik umgewandelt. Dadurch wurde eine Dentalrestauration mit der angestrebten Endfestigkeit erreicht. Sie hatte zudem eine sehr ansprechende Optik in Form einer farblichen Abstufung, die dem Farbverlauf von Dentin zu Schneide entsprach.

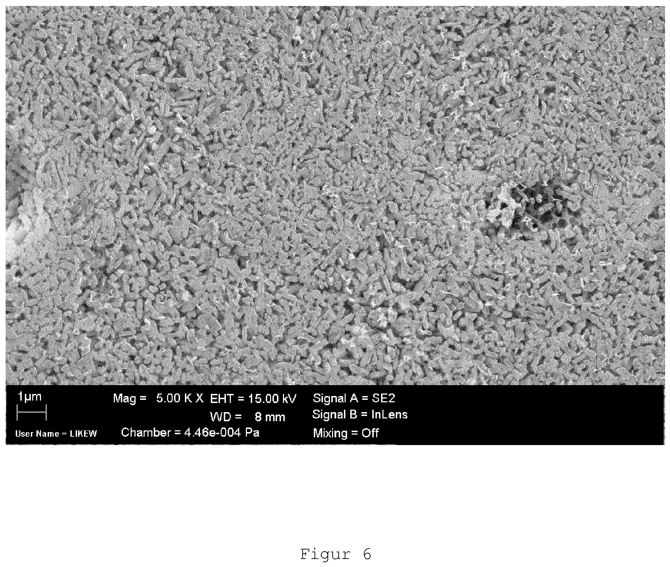

In der Figur 6 ist die REM-Aufnahme eines Schnittes durch einen maschinell nicht bearbeiteten Block mit Lithiumdisilikat gezeigt, nachdem die Oberfläche 30 s mit HF-Dampf behandelt worden war. Auch bei diesem ist überraschenderweise ein sehr homogenes Gefüge über die Grenzfläche hinweg erkennbar, welches die Grenzfläche fast völlig verschwinden lässt. Die Herstellung aus mehreren unterschiedlichen Glasschichten ist ebenfalls nur noch an der unterschiedlichen Farbe der Schichten erkennbar.

### Beispiel 3 - Fügen von Glasschichten mittels Lot

Es wurden entsprechend Beispiel 2 A aus dem Glas 3 und dem Glas 4 unterschiedliche Glasschichten mit Keimen hergestellt.

Auf die zu fügenden Oberflächen der zwei unterschiedlichen Glasschichten mit Keimen wurde ein pulverförmiges Sinterglaslot mit einer mittleren Korngrösse, bezogen auf die Zahl der Partikel, D₅₀, von 6 bis 10 µm aufgebracht, und die beschichteten Flächen wurden exakt aufeinander gelegt.

Anschließend wurden die Glasschichten einer kontrollierten, mehrstufigen Wärmebehandlung unterzogen. Die Glasschichten wurden von Raumtemperatur mit einer Rate von 10 K/min auf 700 °C erwärmt, 10 min bei dieser Temperatur gehalten und abschliessend mit einer Rate von etwa 20 K/min wieder auf Raumtemperatur abgekühlt. Dabei wurde ab etwa 550°C bis zum Ende der Haltezeit ein Vakuum von etwa 50 mbar angelegt. Infolge der Wärmebehandlung schmolz das sinteraktive Glaslot und führte über eine Benetzung der Glasoberflächen zu deren Verbindung. Ebenfalls bildeten sich bei der Wärmebehandlung im Volumen der Glasschichten Lithiummetasilikat-Kristalle. Der erhaltene Block mit Schichten von Lithiummetasilikat-Glaskeramik wurde dann kontrolliert abgekühlt.

Dem Block konnte in einfacher Weise mit herkömmlichen CAM-Einheiten, wie Cerec® MC XL, von Sirona, maschinell die Form von Dentalrestaurationen gegeben werden.

Nach der maschinellen Bearbeitung wurde durch Wärmebehandlung für 10 min bei 850°C die Lithiummetasilikat-Glaskeramik in Lithiumdisilikat-Glaskeramik umgewandelt. Dadurch wurde eine Dentalrestauration mit der angestrebten Endfestigkeit erreicht. Sie hatte zudem eine sehr ansprechende Optik in Form einer farblichen Abstufung, die dem Farbverlauf von Dentin zu Schneide entsprach.

### Beispiel 4 - Fügen von Glasschichten mittels Kleber

Es wurden zunächst entsprechend Beispiel 2 A aus dem Glas 3 und dem Glas 4 unterschiedliche Glasschichten mit Keimen hergestellt.

Diese Glasschichten wurden dann einer kontrollierten, mehrstufigen Wärmebehandlung unterzogen. Die Glasschichten wurden für 10 min bei 500°C wärmebehandelt, um Keime für Lithiummetasilikat zu bilden. Anschliessend wurde eine weitere Wärmebehandlung bei 650°C durchgeführt, die zur Bildung von Lithiummetasilikats als Hauptkristallphase im Volumen der Glasschichten führte. Die erhaltenen Schichten von Lithiummetasilikat-Glaskeramik wurden dann kontrolliert abgekühlt.

Auf die zu verbindenden Oberflächen der Glaskeramik-Schichten wurde der folgende Komposit-Kleber mit kristallisierendem Glasfüller aufgestrichen, und die Schichten wurden genau aufeinander gelegt.
Dualhärtender Komposit-Kleber mit kristallisierender Glasfüllerkomponente:
Komposit mit 60 Gew.- kristallisierendem Glasfüller (d₅₀ < 10 µm, vorzugsweise d₅₀ = 7 µm)
Zusammensetzung Komposit in Gew.-%

| | |
|---|---|
| Urethanacrylat-Oligomer | 15-25 |
| Isobornylacrylat | 40-50 |
| N,N-Dimethacrylamid | 15-25 |
| Adhesions-Promotor | 1-5 |

Zusammensetzung kristallisierender Glasfüller in Gew.-:
70.82 SiO₂, 4.37 K₂O, 14.72 Li₂O, 2.44 Al₂O₃, 3.25 P₂O₅, 0.13 MgO, 0.35 ZnO, 0.92 ZrO₂, 3.00 färbende Oxide

Nach Aushärtung des Klebers war ein Block mit zwei Schichten von Lithiummetasilikat-Glaskeramik entstanden, der analog Beispiel 3 maschinell bearbeitet und durch Kristallisation von Lithiumdisilikat in eine hochfeste und optisch sehr ansprechende Dentalrestauration umgewandelt werden konnte. Bei der zur Kristallisation von Lithiumdisilikat eingesetzten Wärmebehandlung wurde das Komposit vollständig thermisch zersetzt und es verbanden sich die Glaskeramikschichten. Darüber hinaus wirkte der kristallisierende Glasfüller als Sinterglaslot.

### Beispiel 5

Es wurden analog zu den Beispielen 1 bis 4 weitere mehrschichtige Rohlinge hergestellt und mittels CAD/CAM-Verfahren zu Dentalrestaurationen verarbeitet. Dabei wurden die in der folgenden Tabelle 1 ausgegebenen Gläser eingesetzt. Mit ihrer Hilfe waren ebenfalls eine ausgezeichnete Fügung der monolithischen Schichten und eine sehr gute farbliche Abstufung der Schichten erzielbar.

**Tabelle 1:**

| | Glas 5 | Glas 6 | Glas 7 | Glas 8 | Glas 9 | Glas 10 | Glas 11 |
|---|---|---|---|---|---|---|---|
| Komponente | Gew.% | Gew.% | Gew.% | Gew.% | Gew.% | Gew.% | Gew.% |
| SiO₂ | 71.52 | 71.39 | 72.09 | 71.02 | 69.20 | 69.76 | 71.16 |
| K₂O | 4.21 | 4.20 | 4.24 | 4.29 | 3.80 | 3.70 | 4.19 |
| SrO | 0.00 | 1.00 | 0.00 | 0.99 | 0.00 | 0.00 | 0.00 |
| Li₂O | 14.89 | 14.86 | 15.01 | 14.78 | 15.10 | 15.00 | 14.81 |
| Al₂O₃ | 3.31 | 1.17 | 3.33 | 1.16 | 3.40 | 2.00 | 3.29 |
| P₂O₅ | 3.27 | 3.28 | 3.30 | 3.27 | 3.30 | 3.50 | 3.25 |
| MgO | 1.00 | 0.00 | 1.01 | 0.00 | 0.00 | 0.00 | 1.00 |
| ZrO₂ | 0.80 | 2.00 | 0.00 | 1.99 | 0.60 | 2.00 | 0.00 |
| ZnO | 0.00 | 1.00 | 0.00 | 1.40 | 2.00 | 2.00 | 0.00 |
| CeO₂ | 0.50 | 0.60 | 0.51 | 0.60 | 1.70 | 0.60 | 1.70 |
| La₂O₃ | 0.00 | 0.00 | 0.00 | 0.00 | 0.30 | 1.00 | 0.00 |
| V₂O₅ | 0.00 | 0.00 | 0.00 | 0.00 | 0.10 | 0.04 | 0.10 |
| Tb₄O₇ | 0.50 | 0.50 | 0.51 | 0.50 | 0.50 | 0.40 | 0.50 |

In der folgenden Tabelle 2 sind ausgewählte Eigenschaften dieser Gläser und der daraus hergestellten Glaskeramiken aufgeführt.

**Tabelle 2:**

| | Glas 5 | Glas 6 | Glas 7 | Glas 8 | Glas 9 | Glas 10 | Glas 11 |
|---|---|---|---|---|---|---|---|
| Farbwerte | | | | | | | |
| L* | 93.21 | 92.74 | 93.8 | 92.29 | 82.33 | 89.95 | 82.97 |
| a* | -0.49 | -0.78 | -0.54 | -0.71 | 3.27 | -1.48 | 2.21 |
| b* | 5.77 | 5.84 | 4.08 | 6.56 | 20.67 | 12.07 | 20.79 |
| CR-Wert | 76.08 | 58.01 | 80.30 | 56.41 | 80.70 | 50.71 | 82.96 |

| DSC-Auswertung | | | | | | | |
|---|---|---|---|---|---|---|---|
| Tg [°C] | 461.3 | 473.8 | 458.6 | 466 | 462 | 473.1 | 459.6 |
| E1 [°C] | 654 | 668.9 | 646 | 669.9 | 637.5 | 648.1 | 644.7 |
| E2 [°C] | 831 | 810 | 833 | 810 | 828 | 824.5 | 832.5 |
| Ts [°C] | 962.7 | 971.3 | 968.9 | 971.2 | 958.9 | 969.5 | 962.8 |

| WAK [10⁻6.K⁻¹] | | | | | | | |
|---|---|---|---|---|---|---|---|
| 100-500°C | 10.47 | 10.5 | 10.58 | 10.42 | 10.45 | 10.37 | 10.39 |
| 100-600°C | 10.9 | 11.19 | 11.07 | 11.08 | 10.85 | 10.65 | 11.05 |

| Molverhältnis | | | | | | | |
|---|---|---|---|---|---|---|---|
| SiO₂/Li₂O | 2.390 | 2.390 | 2.390 | 2.390 | 2.280 | 2.314 | 2.390 |

| Kristallphasenanteil | | | | | | | |
|---|---|---|---|---|---|---|---|
| 680°C/LS | 32% | 31% | 42% | 34% | 43% | 46% | 41% |
| 850°C/LS2 | 68% | 68% | 69% | 68% | 66% | 66% | 68% |

| Festigkeit | | | | | | | |
|---|---|---|---|---|---|---|---|
| MPa | 500 | 505 | 517 | 509 | 461 | 460 | 595 |

### Farbwerte:

Die Farbwerte wurden mit einem Farbmessgerät (Minolta CM3700D) an Proben der kristallisierten Glaskeramiken mit 2 mm Dicke bestimmt. Die gemessenen L*, a* und b* Werte zeigen, dass die Glaskeramiken in typischen Dentinfarben eingefärbt werden können. Der CR-Wert (Contrast-Ratio) ist ein Mass für die Transluzenz. Die erzielten Kontrastwerte zwischen 50 % und 83 % belegen, dass eine Abstufung von Schneide (hohe Transluzenz) bis zu Dentin (wenig Transluzenz) problemlos möglich ist.

### DSC-Auswertung:

Es sind charakteristische Temperaturen der Gläser angegeben. Tg bezeichnet den Glasübergang. E1 steht für eine 1. exotherme Reaktion, die mit der Kristallisation der Lithiummetasilikatphase korrelliert. E2 steht für eine 2. exotherme Reaktion, die mit der Kristallisation der Lithiumdisilikatphase korrelliert. Ts steht für die Auflösetemperatur der Lithiumdisilikatphase.

Es hat sich gezeigt, dass es für einen guten Verbund der gefügten Gläser und Glaskeramiken von Vorteil ist, wenn sich diese Temperaturen bei den eingesetzten Gläsern und Glaskeramiken nur wenig voneinander unterscheiden, wie dies z.B. bei den Gläsern 5 bis 11 der Fall ist.

### Wärmeausdehnungskoeffizient (WAK):

Der WAK beschreibt das Wärmeausdehnungsverhalten der Glaskeramiken. Für eine spannungsfreien Verbund der Glaskeramiken ist es von Vorteil, wenn die aneinander gefügten Glaskeramiken ähnliche Ausdehnungskoeffizienten aufweisen.

### Molverhältnis:

Das Molverhältnis von SiO₂ zu Li₂O wirkt sich auf die Anteile der gebildeten Kristallphasen aus.

### Kristallphasenanteil:

Der Kristallphasenanteil von Lithiummetasilikat (LS) bestimmt wesentlich die Bearbeitbarkeit des Rohlings. Der Kristallphasenanteil von Lithiumdisilikat (LS2) ist massgeblich für die Eigenschaften der fertigen Restauration von Bedeutung.

### Festigkeit:

Die Festigkeit wurde an "biaxialen Biegeprüfkörpern" aus der jeweiligen Lithiumdisilikat-Glaskeramik gemäß ISO 6872:2008 bestimmt.

### Beispiel 6

Die in der folgenden Tabelle 3 angegebenen Gläser wurden ebenfalls analog zu den Beispielen 1 bis 4 zu mehrschichtigen Rohlingen und schließlich zu Dentalrestaurationen verarbeitet.

**Tabelle 3:**

| | Glas 12 | Glas 13 | Glas 14 | Glas 15 | Glas 16 | Glas 17 | Glas 18 | Glas 19 | Glas 20 | Glas 21 | Glas 22 | Glas 23 |
|---|---|---|---|---|---|---|---|---|---|---|---|---|
| Komponente | Gew.% | Gew.% | Gew.% | Gew.% | Gew.% | Gew.% | Gew.% | Gew.% | Gew.% | Gew.% | Gew.% | Gew.% |
| SiO₂ | 63.80 | 63.80 | 64.93 | 71.00 | 59.00 | 64.93 | 71.00 | 64.96 | 70.18 | 67.65 | 68.60 | 71.01 |
| Li₂O | 13.60 | 13.60 | 13.45 | 14.81 | 12.40 | 13.45 | 14.81 | 13.49 | 15.47 | 14.00 | 15.12 | 14.74 |
| P₂O₅ | 3.00 | 3.00 | 3.00 | 2.50 | 3.90 | 3.00 | 2.50 | 2.95 | 3.80 | 3.90 | 4.36 | 3.09 |
| Na₂O | | | | | | | | | | | | 0.20 |
| K₂O | 3.00 | 3.00 | 3.00 | 4.20 | 3.50 | 3.00 | 4.20 | 3.51 | 4.46 | 3.90 | 3.86 | 3.95 |
| MgO | | | | | | | | | 5.00 | | 0.80 | |
| CaO | | | | | 0.50 | 1.00 | | | | | | 0.45 |
| SrO | | | | | | | | | | 7.00 | | |
| ZnO | | | | | | | | | | | 4.39 | |
| B₂O₃ | | | | | | | | | | | | 0.10 |
| Al₂O₃ | 3.00 | 3.00 | 3.00 | 3.29 | 2.50 | 2.00 | 3.29 | 3.09 | 1.09 | 1.45 | 1.08 | 3.40 |
| Y₂O₃ | | | | | | | | 7.60 | | | | |
| La₂O₃ | | | | | | | | | | | 0.30 | |
| Bi₂O₃ | | | | | | | 3.20 | | | | | |
| TiO₂ | | | | | 0.30 | | | | | | | |
| ZrO₂ | 9.60 | 9. 60 | 4.00 | | 5.00 | 8.00 | | 2.00 | | | | 0.64 |
| GeO₂ | | | | | 7.90 | | | | | | | |
| Ta₂O₅ | | | 6. 00 | 3.20 | 1.00 | 2.00 | | | | | | |
| MoO₃ | 4.00 | | | | | | | | | | | |
| WO₃ | | 4.00 | | | | | | | | | | |
| V₂O₅ | | | 0.12 | | | 0.12 | | 0.10 | | 0.10 | | 0.03 |
| MnO₂ | | | | | | | | | | | | 0.04 |
| Fe₂O₃ | | | | | | | | | | 0.20 | | 0.22 |
| CeO₂ | | | 1.90 | 0.50 | 1.80 | 1.90 | 0.50 | 1.80 | | 1.80 | 0.99 | 1.93 |
| Pr₂O₃ | | | | | 0.70 | | | | | | | |
| Sm₂O₃ | | | | | 1.00 | | | | | | | |
| Tb₄O₇ | | | 0.50 | 0.50 | 0.50 | 0.50 | 0.50 | 0.50 | | | 0.50 | |
| Er₂O₃ | | | 0.10 | | | 0.10 | | | | | | 0.19 |

In der folgenden Tabelle 4 sind ausgewählte Eigenschaften dieser Gläser und der daraus hergestellten Glaskeramiken aufgeführt. Diese Eigenschaften wurden analog zu Beispiel 5 bestimmt.

**Tabelle 4:**

| | Glas 12 | Glas 13 | Glas 14 | Glas 15 | Glas 16 | Glas 17 | Glas 18 | Glas 19 | Glas 20 | Glas 21 | Glas 22 | Glas 23 |
|---|---|---|---|---|---|---|---|---|---|---|---|---|
| Farbe | | | | | | | | | | | | |
| L* | | | 76.03 | | | 79.65 | | 83.09 | 87.3 | | | 80.65 |
| a* | | | 6.22 | | | 3.71 | | 0.8 | 0.2 | | | 4.47 |
| b* | | | 32.1 | | | 27.27 | | 21. 95 | 3.4 | | | 25.11 |
| CR | | | 51.92 | | | 64.83 | | 59.76 | 85 | | | 77.19 |

| DSC-Auswertung | | | | | | | | | | | | |
|---|---|---|---|---|---|---|---|---|---|---|---|---|
| Tg [°C] | 508 | 509 | 493 | 469 | 489 | 496 | 458 | 503 | 460 | | | |
| E1 [°C] | 649 | 651 | 652 | | 602 | 694 | | | 610 | | | |
| E2 [°C] | 820 | 819 | 807 | 711 | 792 | 850 | 671 | 753 | 752 | | | |
| Ts [°C] | 936 | 935 | 947 | 972 | 927 | 945 | 974 | 930 | 965 | | | |
| WAK [10⁻⁶·K⁻¹] | | | | | | | | | | | | |
| 100-500 °C | | | | | | 10.26 | | | | | | |
| 100-600 °C | | | | | | 10.74 | | | | | | |
| Mclverhältnis | | | | | | | | | | | | |
| SiO₂/Li₂O | 2.333 | 2.333 | 2.400 | 2.384 | 2.366 | 2.400 | 2.384 | 2.394 | 2.256 | 2.403 | 2.256 | 2.395 |

| Kristallphasen | | | | | | | | | | | | |
|---|---|---|---|---|---|---|---|---|---|---|---|---|
| 680 °C | | | LS | | LS | LS | LS2 | | | | | LS |
| 850 °C | LS2 LP | LS2 LP SiO₂ | LS2 | LS2 | LS2 | LS2 | LS2 | LS2, LS | LS2, LS | | | LS2 |
| Festigkeit | | | | | | | | | | | | |
| MPa | | | | | 419 | 352 | | | 320 | 520 | | 478 |

| | | | | | | | | | | | | |
|---|---|---|---|---|---|---|---|---|---|---|---|---|
| LS - Lithiummetasilikat LS2 - Lithiumdisilikat LP - Lithiumphosphat | | | | | | | | | | | | |

Bei Glas 15 kristallisierte kein Lithiummetasilikat (LS), jedoch erfolgte bereits bei einer Temperatur von 711 °C Kristallisation von Lithiumdisilikat (LS2). Die maschinelle Bearbeitung erfolgte daher zweckmässigerweise bereits nach der Keimbildung (500 °C/10 min).

Glas 18 bildete wie Glas 15 ebenfalls kein LS aus. Die Kristallisation von LS2 erfolgte bereits bei 670 °C.

Glas 19 zeigte nach der ersten Kristallisation nur wenig Lithiummetasilikat-Kristallphase. Die nach der zweiten Kristallisation vorliegende Lithiumdisilikat-Glaskeramik besaß eine sehr hohe Transluzenz.

### Beispiel 7

Ein Glas der nachstehenden Zusammensetzung wurde analog Beispiel 3 als Sinterglaslot benutzt, um Schichten aus keimgebildeten Gläsern gemäß Tabelle 1 bei 690°C miteinander zu verbinden.

| Komponente | Gew.-% |
|---|---|
| SiO₂ | 64.65 |
| K₂O | 7.29 |
| Na₂O | 6.75 |
| SrO | 2.22 |
| Li₂O | 2.07 |
| CaO | 1.29 |
| Al₂O₃ | 6.61 |
| B₂O₃ | 1.71 |
| TiO₂ | 1.45 |
| ZrO₂ | 0.60 |
| ZnO | 3.08 |
| CeO₂ | 0.56 |
| F | 1.72 |

## Patentansprüche

1. Rohling für dentale Zwecke, der mindestens 2 miteinander verbundene Schichten von
Lithiumsilikat-Glas,
Lithiumsilikat-Glas mit Keimen oder
Lithiummetasilikat-Glaskeramik
aufweist, wobei die Schichten sich in der Farbe unterscheiden und die Schichten monolithisch sind und wobei das Lithiumsilikat-Glas, das Lithiumsilikat-Glas mit Keimen und die Lithiummetasilikat-Glaskeramik 2,00 bis 5,00 Gew.-% K₂O enthalten.

2. Rohling nach Anspruch 1, der Schichten von Lithiumsilikat-Glas mit Keimen oder Schichten von Lithiummetasilikat-Glaskeramik aufweist.

3. Rohling nach Anspruch 1 oder 2, bei dem die Lithiummetasilikat-Glaskeramik als Hauptkristallphase Lithiummetasilikat enthält und insbesondere mehr als 5 Vol.-%, bevorzugt mehr als 10 Vol.-% und besonders bevorzugt mehr als 20 Vol.-% an Lithiummetasilikat-Kristallen enthält.

4. Rohling für dentale Zwecke, der mindestens 2 miteinander verbundene Schichten von
Lithiumdisilikat-Glaskeramik
aufweist, wobei die Schichten sich in der Farbe unterscheiden und die Schichten monolithisch sind und wobei die Lithiumdisilikat-Glaskeramik 2,00 bis 5,00 Gew.-% K₂O enthält.

5. Rohling nach Anspruch 4, bei dem die Lithiumdisilikat-Glaskeramik als Hauptkristallphase Lithiumdisilikat enthält und insbesondere mehr als 30 Vol.-%, bevorzugt mehr als 40 Vol.-% und besonders bevorzugt mehr als 50 Vol.-% an Lithiumdisilikat-Kristallen enthält.

6. Rohling nach einem der Ansprüche 1 bis 5, bei dem das Lithiumsilikat-Glas, das Lithiumsilikat-Glas mit Keimen, die Lithiummetasilikat-Glaskeramik und die Lithiumdisilikat-Glaskeramik mindestens eine und vorzugsweise alle der folgenden Komponenten in den angegebenen Mengen enthalten:
| Komponente | Gew.-% |
|---|---|
| SiO₂ | 50,0 bis 80,0 |
| Li₂O | 6,0 bis 20,0 |
| Me(I)₂O | 2,00 bis 10,0 |
| Me(II)O | 0 bis 12,0, insbesondere 0,1 bis 12,0 |
| Me(III)₂O₃ | 0 bis 8,0, insbesondere 0,1 bis 8,0 |
| Me(IV)O₂ | 0 bis 8,0, insbesondere 0,1 bis 8,0 |
| Me(V)₂O₅ | 0 bis 8,0, insbesondere 0,1 bis 8,0 |
| Me(VI)O₃ | 0 bis 8,0, insbesondere 0,1 bis 8,0 |
| Keimbildner | 0 bis 8,0, insbesondere 0,1 bis 8,0, |
wobei
Me (I) ₂O ausgewählt ist aus Na₂O, K₂O, Rb₂O, Cs₂O oder Mischungen davon,
Me(II)O ausgewählt ist aus CaO, BaO, MgO, SrO, ZnO und Mischungen davon,
Me(III)₂O₃ ausgewählt ist aus Al₂O₃, La₂O₃, Bi₂O₃, Y₂O₃, Yb₂O₃ und Mischungen davon,
Me(IV)O₂ ausgewählt ist aus ZrO₂, TiO₂, SnO₂, GeO₂ und Mischungen davon,
Me(V)₂O₅ ausgewählt ist aus Ta₂O₅, Nb₂O₅ und Mischungen davon,
Me(VI)O₃ ausgewählt ist aus WO₃, MoO₃ und Mischungen davon, und
Keimbildner ausgewählt ist aus P₂O₅, Metallen und Mischungen davon.

7. Rohling nach einem der Ansprüche 1 bis 6, bei dem das Lithiumsilikat-Glas, das Lithiumsilikat-Glas mit Keimen, die Lithiummetasilikat-Glaskeramik und die Lithiumdisilikat-Gaskeramik mindestens eine und vorzugsweise alle der folgenden Komponenten in den angegebenen Mengen enthalten
| Komponente | Gew.-% |
|---|---|
| SiO₂ | 65,00 bis 75,00 |
| Li₂O | 14,00 bis 16,00 |
| SrO und CaO | 0 bis 2,00 |
| MgO | 0 bis 2,00 |
| ZnO | 0 bis 2,00 |
| Al₂O₃ | 1,50 bis 3,50 |
| La₂O₃ | 0 bis 2,00 |
| ZrO₂ | 0 bis 4,00 |
| P₂O₅ | 2,50 bis 4,00 |

8. Rohling nach einem der Ansprüche 1 bis 7, der einen Halter für eine Bearbeitungsvorrichtung aufweist, wobei der Halter insbesondere aus Metall oder Kunststoff besteht.

9. Verfahren zur Herstellung des Rohlings mit Schichten von Lithiumsilikat-Glas, Lithiumsilikat-Glas mit Keimen oder Lithiummetasilikat-Glaskeramik gemäß einem der Ansprüche 1 bis 3 oder 6 bis 8, bei dem
(i) monolithische Schichten von Lithiumsilikat-Glas, Lithiumsilikat-Glas mit Keimen oder Lithiummetasilikat-Glaskeramik aufeinander angeordnet und
(ii) die Schichten miteinander verbunden werden.

10. Verfahren nach Anspruch 9, bei dem Schichten von Lithiumsilikat-Glas oder Lithiumsilikat-Glas mit Keimen in Schichten von Lithiumsilikat-Glas mit Keimen oder Lithiummetasilikat-Glaskeramik umgewandelt werden und insbesondere durch mindestens eine Wärmebehandlung umgewandelt werden.

11. Verfahren nach Anspruch 10, bei dem Schichten von Lithiumsilikat-Glas oder Lithiumsilikat-Glas mit Keimen durch mindestens eine Wärmebehandlung miteinander verbunden und zu Schichten mit Lithiummetasilikat-Glaskeramik umgewandelt werden, um einen Rohling mit Schichten von Lithiummetasilikat-Glaskeramik herzustellen.

12. Verfahren nach einem der Ansprüche 9 bis 11, bei dem
(a1) eine monolithische Schicht in Form einer Schmelze auf eine andere monolithische Schicht aufgebracht wird.

13. Verfahren nach Anspruch 12 bei dem monolithische Schichten von Lithiumsilikat-Glas eingesetzt werden.

14. Verfahren nach Anspruch 13, bei dem die eine monolithische Schicht eine Temperatur von 1100 bis 1500°C hat und die andere monolithische Schicht eine Temperatur von 400 bis 600°C hat.

15. Verfahren nach einem der Ansprüche 9 bis 11, bei dem
(b1) die aufeinander angeordneten monolithischen Schichten auf eine Temperatur von mindestens 500 und insbesondere eine Temperatur im Bereich von 550 bis 750°C erwärmt werden.

16. Verfahren nach Anspruch 15, bei dem in Stufe (b1) die Schichten mit einem Druck von insbesondere 0,01 bis 4,0 MPa aneinander gepresst werden.

17. Verfahren nach Anspruch 15 oder 16, bei dem die einander zugewandten Oberflächen der Schichten geglättet werden.

18. Verfahren nach einem der Ansprüche 9 bis 11, bei dem
(c1) zwischen den monolithischen Schichten ein Verbindungsmittel vorgesehen wird.

19. Verfahren nach Anspruch 18, bei dem das Verbindungsmittel ein Glaslot, ein kristallisierendes Glaslot, ein Glaskeramiklot oder ein Kleber ist.

20. Verfahren zur Herstellung des Rohlings mit Schichten von Lithiumdisilikat-Glaskeramik gemäß einem der Ansprüche 4 bis 8, bei dem
(iii)ein Rohling mit Schichten von Lithiumsilikat-Glas, Lithiumsilikat-Glas mit Keimen und Lithiummetasilikat-Glaskeramik gemäß einem der Ansprüche 1 bis 3 oder 6 bis 8 mindestens einer Wärmebehandlung unterworfen wird, um das Lithiumsilikat-Glas, das Lithiumsilikat-Glas mit Keimen oder die Lithiummetasilikat-Glaskeramik in Lithiumdisilikat-Glaskeramik umzuwandeln.

21. Verfahren nach Anspruch 20, bei dem ein Rohling mit Schichten von Lithiumsilikat-Glas mit Keimen oder mit Schichten von Lithiummetasilikat-Glaskeramik der Wärmebehandlung unterworfen wird.

22. Verfahren nach Anspruch 20 oder 21 bei dem die Wärmebehandlung bei einer Temperatur von mindestens 750°C und insbesondere einer Temperatur im Bereich von 750 bis 950°C durchgeführt wird.

23. Verfahren zur Herstellung einer Dentalrestauration, bei dem
(d1) einem Rohling mit Schichten von Lithiumsilikat-Glas, Lithiumsilikat-Glas mit Keimen oder Lithiummetasilikat-Glaskeramik gemäß einem der Ansprüche 1 bis 3 oder 6 bis 8 durch maschinelle Bearbeitung die Form der Dentalrestauration gegeben wird,
(d2) mindestens eine Wärmebehandlung durchgeführt wird, um das Lithiumsilikat-Glas, das Lithiumsilikat-Glas mit Keimen oder die Lithiummetasilikat-Glaskeramik in Lithiumdisilikat-Glaskeramik umzuwandeln, und
(d3) gegebenenfalls die Oberfläche der erhaltenen Dentalrestauration endbehandelt wird
oder
(e1) einem Rohling mit Schichten von Lithiumdisilikat-Glaskeramik gemäß einem der Ansprüche 4 bis 8 durch maschinelle Bearbeitung die Form der Dentalrestauration gegeben wird und
(e2) gegebenenfalls die Oberfläche der erhaltenen Dentalrestauration endbehandelt wird.

24. Verfahren nach Anspruch 23, bei dem die maschinelle Bearbeitung mit computergesteuerten Fräs- und/oder Schleifvorrichtungen erfolgt.

25. Verfahren nach Anspruch 23 oder 24, bei dem die Dentalrestauration ausgewählt ist aus der Gruppe von Kronen, Abutments, Abutmentkronen, Inlays, Onlays, Veneers, Schalen, Brücken und Überwürfen.

26. Verwendung des Rohlings nach einem der Ansprüche 1 bis 8 zur Herstellung von Dentalrestaurationen und insbesondere von Kronen, Abutments, Abutmentkronen, Inlays, Onlays, Veneers, Schalen, Brücken und Überwürfen.

## Claims

1. Blank for dental purposes which has at least 2 layers, bonded to one another, of
lithium silicate glass,
lithium silicate glass with nuclei or
lithium metasilicate glass ceramic,
wherein the layers differ in colour and the layers are monolithic and wherein the lithium silicate glass, the lithium silicate glass with nuclei and the lithium metasilicate glass ceramic comprise 2.00 to 5.00 wt.-% K₂O.

2. Blank according to claim 1 which has layers of lithium silicate glass with nuclei or layers of lithium metasilicate glass ceramic.

3. Blank according to claim 1 or 2, in which the lithium metasilicate glass ceramic comprises lithium metasilicate as main crystal phase and in particular comprises more than 5 vol.-%, preferably more than 10 vol.-% and particularly preferably more than 20 vol.-% lithium metasilicate crystals.

4. Blank for dental purposes which has at least 2 layers, bonded to one another, of
lithium disilicate glass ceramic,
wherein the layers differ in colour and the layers are monolithic and wherein the lithium disilicate glass ceramic comprise 2.00 to 5.00 wt.-% K₂O.

5. Blank according to claim 4, in which the lithium disilicate glass ceramic comprises lithium disilicate as main crystal phase and in particular comprises more than 30 vol.-%, preferably more than 40 vol.-% and particularly preferably more than 50 vol.-% lithium disilicate crystals.

6. Blank according to any one of claims 1 to 5, in which the lithium silicate glass, the lithium silicate glass with nuclei, the lithium metasilicate glass ceramic and the lithium disilicate glass ceramic comprise at least one and preferably all of the following components in the given amounts:
| Component | wt.-% |
|---|---|
| SiO₂ | 50.0 to 80.0 |
| Li₂O | 6.0 to 20.0 |
| Me(I)₂O | 2.00 to 10.0 |
| Me(II)O | 0 to 12.0, in particular 0.1 to 12.0 |
| Me(III)₂O₃ | 0 to 8.0, in particular 0.1 to 8.0 |
| Me(IV)O₂ | 0 to 8.0, in particular 0.1 to 8.0 |
| Me(V)₂O₅ | 0 to 8.0, in particular 0.1 to 8.0 |
| Me(VI)O₃ | 0 to 8.0, in particular 0.1 to 8.0 |
| nucleating agent | 0 to 8.0, in particular 0.1 to 8.0, |
wherein
Me(I)₂O is selected from Na₂O, K₂O, Rb₂O, Cs₂O or mixtures thereof,
Me(II)O is selected from CaO, BaO, MgO, SrO, ZnO and mixtures thereof,
Me(III)₂O₃ is selected from Al₂O₃, La₂O₃, Bi₂O₃, Y₂O₃, Yb₂O₃ and mixtures thereof,
Me(IV)O₂ is selected from ZrO₂, TiO₂, SnO₂, GeO₂ and mixtures thereof,
Me(V)₂O₅ is selected from Ta₂O₅, Nb₂O₅ and mixtures thereof,
Me(VI)O₃ is selected from WO₃, MoO₃ and mixtures thereof, and
nucleating agent is selected from P₂O₅, metals and mixtures thereof.

7. Blank according to any one of claims 1 to 6, in which the lithium silicate glass, the lithium silicate glass with nuclei, the lithium metasilicate glass ceramic and the lithium disilicate glass ceramic comprise at least one and preferably all of the following components in the given amounts:
| Component | wt.-% |
|---|---|
| SiO₂ | 65.00 to 75.00 |
| Li₂O | 14.00 to 16.00 |
| SrO and CaO | 0 to 2.00 |
| MgO | 0 to 2.00 |
| ZnO | 0 to 2.00 |
| Al₂O₃ | 1.50 to 3.50 |
| La₂O₃ | 0 to 2.00 |
| ZrO₂ | 0 to 4.00 |
| P₂O₅ | 2.50 to 4.00. |

8. Blank according to any one of claims 1 to 7, which has a holding means for a processing device, wherein the holding means consists in particular of metal or plastic.

9. Process for producing the blank with layers of lithium silicate glass, lithium silicate glass with nuclei or lithium metasilicate glass ceramic according to any one of claims 1 to 3 or 6 to 8, in which
(i) monolithic layers of lithium silicate glass, lithium silicate glass with nuclei or lithium metasilicate glass ceramic are arranged on top of one another and
(ii) the layers are bonded to one another.

10. Process according to claim 9, in which layers of lithium silicate glass or lithium silicate glass with nuclei are converted to layers of lithium silicate glass with nuclei or lithium metasilicate glass ceramic and in particular are converted by at least one heat treatment.

11. Process according to claim 10, in which layers of lithium silicate glass or lithium silicate glass with nuclei are by at least one heat treatment bonded to one another and converted to layers with lithium metasilicate glass ceramic in order to produce a blank with layers of lithium metasilicate glass ceramic.

12. Process according to any one of claims 9 to 11, in which
(a1) a monolithic layer is applied in the form of a melt on another monolithic layer.

13. Process according to claim 12 in which monolithic layers of lithium silicate glass are used.

14. Process according to claim 13, in which one monolithic layer has a temperature of from 1100 to 1500°C and the other monolithic layer has a temperature of from 400 to 600°C.

15. Process according to any one of claims 9 to 11, in which
(b1) the monolithic layers arranged on top of one another are heated to a temperature of at least 500 and in particular a temperature in the range of from 550 to 750°C.

16. Process according to claim 15, in which in step (b1) the layers are pressed together at a pressure of in particular 0.01 to 4.0 MPa.

17. Process according to claim 15 or 16, in which the surfaces facing one another of the layers are smoothed.

18. Process according to any one of claims 9 to 11, in which
(c1) a bonding means is provided between the monolithic layers.

19. Process according to claim 18, in which the bonding means is a glass solder, a crystallizing glass solder, a glass ceramic solder or an adhesive.

20. Process for producing the blank with layers of lithium disilicate glass ceramic according to any one of claims 4 to 8, in which
(iii)a blank with layers of lithium silicate glass, lithium silicate glass with nuclei and lithium metasilicate glass ceramic according to any one of claims 1 to 3 or 6 to 8 is subjected to at least one heat treatment in order to convert the lithium silicate glass, the lithium silicate glass with nuclei or the lithium metasilicate glass ceramic to lithium disilicate glass ceramic.

21. Process according to claim 20, in which a blank with layers of lithium silicate glass with nuclei or with layers of lithium metasilicate glass ceramic is subjected to the heat treatment.

22. Process according to claim 20 or 21, in which the heat treatment is carried out at a temperature of at least 750°C and in particular a temperature in the range of from 750 to 950°C.

23. Process for producing a dental restoration, in which
(d1) a blank with layers of lithium silicate glass, lithium silicate glass with nuclei or lithium metasilicate glass ceramic according to any one of claims 1 to 3 or 6 to 8 is given the shape of the dental restoration by machining,
(d2) at least one heat treatment is carried out in order to convert the lithium silicate glass, the lithium silicate glass with nuclei or the lithium metasilicate glass ceramic to lithium disilicate glass ceramic, and
(d3) optionally the surface of the obtained dental restoration is provided with a finish.
or
(e1) a blank with layers of lithium disilicate glass ceramic according to any one of claims 4 to 8 is given the shape of the dental restoration by machining and
(e2) optionally the surface of the obtained dental restoration is provided with a finish.

24. Process according to claim 23, in which the machining is carried out with computer-controlled milling and/or grinding devices.

25. Process according to claim 23 or 24, in which the dental restoration is selected from the group of crowns, abutments, abutment crowns, inlays, onlays, veneers, facets, bridges and overstructures.

26. Use of the blank according to any one of claims 1 to 8 for producing dental restorations and in particular crowns, abutments, abutment crowns, inlays, onlays, veneers, facets, bridges and overstructures.

## Revendications

1. Ébauche à des fins dentaires, qui comporte au moins 2 couches de
verre de silicate de lithium,
verre de silicate de lithium avec germes ou
vitrocéramique de métasilicate de lithium
liées entre elles, dans laquelle les couches se différencient par la couleur et les couches sont monolithiques et dans laquelle le verre de silicate de lithium, le verre de silicate de lithium avec germes et la vitrocéramique de métasilicate de lithium contiennent 2,00 à 5,00 % en poids de K₂O.

2. Ébauche selon la revendication 1, qui comporte des couches de verre de silicate de lithium avec germes ou des couches de vitrocéramique de métasilicate de lithium.

3. Ébauche selon la revendication 1 ou 2, dans laquelle la vitrocéramique de métasilicate de lithium contient en tant que phase cristalline principale du métasilicate de lithium et en particulier plus de 5 % en volume, de préférence plus de 10 % en volume et de façon particulièrement préférée plus de 20 % en volume de cristaux de métasilicate de lithium.

4. Ébauche à des fins dentaires, qui comporte au moins 2 couches de
vitrocéramique de disilicate de lithium
liées entre elles, dans laquelle les couches se différencient par la couleur et les couches sont monolithiques et dans laquelle la vitrocéramique de disilicate de lithium contient 2,00 à 5,00 % en poids de K₂O.

5. Ébauche selon la revendication 4, dans laquelle la vitrocéramique de disilicate de lithium contient en tant que phase cristalline principale du disilicate de lithium et en particulier plus de 30 % en volume, de préférence plus de 40 % en volume et de façon particulièrement préférée plus de 50 % en volume de cristaux de disilicate de lithium.

6. Ébauche selon l'une quelconque des revendications 1 à 5, dans laquelle le verre de silicate de lithium, le verre de silicate de lithium avec germes, la vitrocéramique de métasilicate de lithium et la vitrocéramique de disilicate de lithium contiennent au moins un et de préférence la totalité des composants suivants en les quantités indiquées :
| Composant | % en poids |
|---|---|
| SiO₂ | 50,0 à 80,0 |
| Li₂O | 6,0 à 20,0 |
| Me(I)₂O | 2,00 à 10,0 |
| Me(II)O | 0 à 12,0, en particulier 0,1 à 12,0 |
| Me(III)₂O₃ | 0 à 8,0, en particulier 0,1 à 8,0 |
| Me(IV)O₂ | 0 à 8,0, en particulier 0,1 à 8,0 |
| Me(V)₂O₅ | 0 à 8,0, en particulier 0,1 à 8,0 |
| Me(VI)O₃ | 0 à 8,0, en particulier 0,1 à 8,0 |
| Agent de nucléation | 0 à 8,0, en particulier 0,1 à 8,0, |
où
Me(I)₂O est choisi parmi Na₂O, K₂O, Rb₂O, Cs₂O ou des mélanges de ceux-ci,
Me(II)O est choisi parmi CaO, BaO, MgO, SrO, ZnO et des mélanges de ceux-ci,
Me(III)₂O₃ est choisi parmi Al₂O₃, La₂O₃, Bi₂O₃, Y₂O₃, Yb₂O₃ et des mélanges de ceux-ci,
Me(IV)O₂ est choisi parmi ZrO₂, TiO₂, SnO₂, GeO₂ et des mélanges de ceux-ci,
Me(V)₂O₅ est choisi parmi Ta₂O₅, Nb₂O₅ et des mélanges de ceux-ci,
Me(VI)O₃ est choisi parmi WO₃, MoO₃ et des mélanges de ceux-ci, et
l'agent de nucléation est choisi parmi P₂O₅, les métaux et des mélanges de ceux-ci,

7. Ébauche selon l'une quelconque des revendications 1 à 6, dans laquelle le verre de silicate de lithium, le verre de silicate de lithium avec germes, la vitrocéramique de métasilicate de lithium et la vitrocéramique de disilicate de lithium contiennent au moins un et de préférence la totalité des composants suivants en les quantités indiquées :
| Composant | % en poids |
|---|---|
| SiO₂ | 65,00 à 75,00 |
| Li₂O | 14,00 à 16,00 |
| SrO et CaO | 0 à 2,00 |
| MgO | 0 à 2,00 |
| ZnO | 0 à 2,00 |
| Al₂O₃ | 1,50 à 3,50 |
| La₂O₃ | 0 à 2,00 |
| ZrO₂ | 0 à 4,00 |
| P₂O₅ | 2,50 à 4,00 |

8. Ébauche selon l'une quelconque des revendications 1 à 7, qui comporte un soutien pour un appareil de finissage, le soutien étant constitué en particulier de métal ou matière plastique.

9. Procédé pour la fabrication de l'ébauche comportant des couches de verre de silicate de lithium, verre de silicate de lithium avec germes ou vitrocéramique de métasilicate de lithium selon l'une quelconque des revendications 1 à 3 ou 6 à 8, dans lequel
(i) on dispose l'une/les unes sur l'autre/les autres des couches monolithiques de verre de silicate de lithium, verre de silicate de lithium avec germes ou vitrocéramique de métasilicate de lithium et
(ii) on lie les couches entre elles.

10. Procédé selon la revendication 9, dans lequel on convertit et en particulier on convertit par au moins un traitement thermique des couches de verre de silicate de lithium ou verre de silicate de lithium avec germes en couches de verre de silicate de lithium avec germes ou vitrocéramique de métasilicate de lithium.

11. Procédé selon la revendication 10, dans lequel par au moins un traitement thermique on lie entre elles et convertit des couches de verre de silicate de lithium ou verre de silicate de lithium avec germes en couches comportant de la vitrocéramique de métasilicate de lithium, afin de produire une ébauche comportant des couches de vitrocéramique de métasilicate de lithium.

12. Procédé selon l'une quelconque des revendications 9 à 11, dans lequel (a1) on applique une couche monolithique sous forme d'une masse fondue sur une
autre couche monolithique.

13. Procédé selon la revendication 12, dans lequel on utilise des couches monolithiques de verre de silicate de lithium.

14. Procédé selon la revendication 13, dans lequel ladite une couche monolithique a une température de 1 100 à 1 500 °C et l'autre couche monolithique a une température de 400 à 600 °C.

15. Procédé selon l'une quelconque des revendications 9 à 11, dans lequel (b1) on chauffe à une température d'au moins 500 et en particulier une température
dans la plage de 550 à 750 °C les couches monolithiques disposées l'une/les
unes sur l'autre/les autres.

16. Procédé selon la revendication 15, dans lequel dans l'étape (b1) on presse l'une/les unes sur l'autre/les autres les couches avec une pression d'en particulier 0,01 à 4,0 Mpa.

17. Procédé selon la revendication 15 ou 16, dans lequel les surfaces se faisant face des couches sont lissées.

18. Procédé selon l'une quelconque des revendications 9 à 11, dans lequel (c1) on prévoit un moyen de liaison entre les couches monolithiques.

19. Procédé selon la revendication 18, dans lequel le moyen de liaison est un agent de brasage du verre, un agent de brasage du verre cristallisant, un agent de brasage de vitrocéramique ou une colle.

20. Procédé pour la fabrication de l'ébauche comportant des couches de vitrocéramique de disilicate de lithium selon l'une quelconque des revendications 4 à 8, dans lequel
(iii) on soumet à au moins un traitement thermique une ébauche comportant des couches de verre de silicate de lithium, verre de silicate de lithium avec germes et vitrocéramique de métasilicate de lithium selon l'une quelconque des revendications 1 à 3 ou 6 à 8 afin de convertir le verre de silicate de lithium, le verre de silicate de lithium avec germes ou la vitrocéramique de métasilicate de lithium en vitrocéramique de disilicate de lithium.

21. Procédé selon la revendication 20, dans lequel on soumet au traitement thermique une ébauche comportant des couches de verre de silicate de lithium avec germes ou comportant des couches de vitrocéramique de métasilicate de lithium.

22. Procédé selon la revendication 20 ou 21, dans lequel on effectue le traitement thermique à une température d'au moins 750 °C, en particulier à une température dans la plage de 750 à 950 °C.

23. Procédé pour la fabrication d'une restauration dentaire, dans lequel
(d1) on donne par usinage la forme de la restauration dentaire à une ébauche comportant des couches de verre de silicate de lithium, verre de silicate de lithium avec germes ou vitrocéramique de métasilicate de lithium selon l'une quelconque des revendications 1 à 3 ou 6 à 8,
(d2) on effectue au moins un traitement thermique, afin de convertir le verre de silicate de lithium, le verre de silicate de lithium avec germes ou la vitrocéramique de métasilicate de lithium en vitrocéramique de disilicate de lithium, et
(d3) éventuellement on soumet à un traitement final la surface de la restauration dentaire obtenue
ou
(e1) on donne par usinage la forme de la restauration dentaire à une ébauche comportant des couches de vitrocéramique de disilicate de lithium selon l'une quelconque des revendications 4 à 8 et
(e2) éventuellement on soumet à un traitement final la surface de la restauration dentaire obtenue.

24. Procédé selon la revendication 23, dans lequel l'usinage s'effectue avec des appareils de fraisage et/ou meulage commandés par ordinateur.

25. Procédé selon la revendication 23 ou 24, dans lequel la restauration dentaire est choisie dans l'ensemble constitué pat les couronnes, piliers, couronnes piliers, inlays, onlays, placages, facettes, bridges et superstructures.

26. Utilisation de l'ébauche selon l'une quelconque des revendications 1 à 8 pour la fabrication de restaurations dentaires et en particulier de couronnes, piliers, couronnes piliers, inlays, onlays, placages, facettes, bridges et superstructures.
